# EUROPÄISCHE PATENTSCHRIFT

(11) **EP 2 932 439 B1**
(45) Veröffentlichungstag und Bekanntmachung des Hinweises auf die Patenterteilung: **15.04.2020**
(21) Anmeldenummer: 13805866.4
(22) Anmeldetag: 13.12.2013
(51) Int. Cl.: G06K 19/077

(54) **VERFAHREN UND VORRICHTUNG ZUR HERSTELLUNG EINES WERT- UND/ODER SICHERHEITSDOKUMENTS MIT EINER ANTENNENSTRUKTUR**
METHOD AND DEVICE FOR PRODUCING A VALUE DOCUMENT AND/OR A SECURITY DOCUMENT HAVING AN ANTENNA STRUCTURE
PROCÉDÉ ET DISPOSITIF POUR FABRIQUER UN DOCUMENT DE VALEUR ET/OU DE SÉCURITÉ COMPRENANT UNE STRUCTURE D'ANTENNE

(30) Priorität: 17.12.2012 DE 102012223472
(43) Veröffentlichungstag der Anmeldung: 21.10.2015
(73) Patentinhaber: Bundesdruckerei GmbH, 10969 Berlin (DE)
(72) Erfinder: FERBER, Alexander, 12105 Berlin (DE); MUTH, Oliver, 12277 Berlin (DE); KLOESER, Joachim, 10779 Berlin (DE)
(74) Vertreter: Ramrath, Lukas
(86) Internationale Anmeldenummer: PCT/EP2013/076511
(87) Internationale Veröffentlichungsnummer: WO 2014/095615

(56) Entgegenhaltungen:
- EP-A1- 2 338 664
- EP-A2- 1 801 569
- DE-A1- 2 557 658
- DE-A1-102008 063 706

## Beschreibung

Die Erfindung betrifft ein Verfahren und eine Vorrichtung zur Herstellung eines Wert- und/oder Sicherheitsdokuments mit einer Antennenstruktur, insbesondere eines laminierten Wert- und/oder Sicherheitsdokuments mit einer Datenübertragungseinrichtung.

Es sind bereits Wert- und/oder Sicherheitsdokumente bekannt, die eine kontaktlose Datenübertragungseinrichtung beinhalten. Zur Datenspeicherung und/oder Datenverarbeitung werden bereits seit längerer Zeit elektronische Bauelemente in das Dokument integriert, mit denen Daten gespeichert und/oder verarbeitet werden können.

Aus dem Stand der Technik sind hierbei Sicherheitsdokumente bekannt, die ein so genanntes Inlay oder eine so genannte Inlay-Lage beinhalten. Ein Inlay kann hierbei eine Trägerlage, z.B. eine als Trägerfolie ausgebildete Trägerlage, umfassen, die mit aktiven und passiven elektrischen oder elektronischen Bauelementen bestückt wird. Die WO 2011/003518 A1 beschreibt ein Verfahren zur Herstellung eines Inlays für einen Folienverbund, insbesondere ein Inlay für die Weiterverarbeitung zu einem Wert- oder Sicherheitsdokument, bei dem eine Trägerfolie mit mehreren darauf angeordneten und einander zugeordneten elektronischen Bauelementen einer Bilderfassungseinrichtung zugeführt wird, durch welche zumindest die Position von einem elektronischen Bauelement als Nutzen erfasst wird. Weiter wird eine auf die Trägerfolie aufzubringende lasersensitive Ausgleichsfolie zunächst einer Laserschneideinrichtung zugeführt. Weiter werden die Ausgleichsfolie mit den daran eingebrachten Aussparungen und das Trägermaterial in einer Zusammenführstation zusammengeführt und passergenau zueinander ausgerichtet zu einem Inlay fixiert. Hierbei wird mit der Laserschneideinrichtung zur Herstellung der Aussparungen, mit einer weiteren Laserschneideinrichtung oder mit einer Markierungseinrichtung für jeden Nutzen oder eine Gruppe von Nutzen eine Steuermarke auf die Ausgleichsfolie in Abhängigkeit von der jeweiligen erfassten Position des elektronischen Bauelements auf der Trägerfolie aufgebracht.

Aus DE 10 2010 028 444 A1 geht ein Dokument mit einem Chip und einer Antenne zur induktiven Einkopplung von Energie hervor. Die Antenne dieses Dokuments weist eine äußere Windung, zumindest eine mittlere Windung und eine innere Windung auf, wobei die mittlere Windung zwischen der äußeren und der inneren Windung angeordnet ist und der Chip mit der äußeren und der inneren Windung in elektrischem Kontakt steht. Die mittlere Windung überbrückt den Chip in einem Überbrückungsbereich der Antenne. Die Antenne ist spiralförmig ausgebildet. Der Chip ist in Flip-Chip-Technik über den Antennenwindungen montiert. Die Antennenwindungen können im Chipbereich eine geringere Breite aufweisen als im übrigen Bereich der Windungen.

Die EP 1 801 569 A2 offenbart ein Verfahren umfassend das Bestrahlen eines Wafers mit einem Infrarot-Licht und Belichten einer Kamera durch ein von dem Wafer übertragenes Licht. Die Kamera erzeugt ein Bild eines Abschnitts des Wafers, der in einer Bildverarbeitung ausgewertet wird. Weiter offenbart ist ein Gerät zur Detektion von Rissen in einer dünnen Waferplatte, z.B. in einem Halbleiter oder Siliziumwafer.

Die EP 2 338 664 A1 offenbart ein Verfahren, welches das teilweise Bedrucken eines flachen Folienstück beinhaltet, das aus einem thermoplastischen Material hergestellt ist. Bei der Herstellung eines Wert- und/oder Sicherheitsdokuments, welches eine Antennenstruktur enthält, kann ein elektronisches Bauelement in einer gewünschten Position und/oder Orientierung zur einer vorab aufgebrachten Antennenstruktur aufgebracht werden, so dass Kontaktstellen des elektronischen Bauelements die Antennenstruktur kontaktieren können. Hiernach kann auch mindestens eine weitere laminierfähige Lage aufgebracht und der entstehende Lagenverbund zu einem Laminat laminiert werden. Im Herstellungsprozess, insbesondere während der Aufbringung des elektronischen Bauelements oder während der Lamination, kann es zu einer Rissbildung in der Antennenstruktur kommen. Die Qualität und die Gleichmäßigkeit des Antennendrucks sind jedoch entscheidend für die spätere Funktionsfähigkeit des Wert- und/oder Sicherheitsdokuments.

Die DE 10 2008 063 706 A1 offenbart Dual-Interface Karten, welche mit SIM-Karten-Stanzung (=Plug-In-Stanzung) versehen sind.

Problematisch ist, dass die Beurteilung oder Kontrolle einer Qualität der Antennenstruktur, insbesondere nach der Lamination, im Herstellungsprozess des Wert- und/oder Sicherheitsdokuments schwierig und zeitaufwändig ist.

Es stellt sich das technische Problem, ein Verfahren und eine Vorrichtung zur Herstellung eines Wert- und/oder Sicherheitsdokuments mit einer Antennenstruktur zu schaffen, wobei ein aufgrund von Rissen in einer Antennenstruktur gebildeter Ausschuss im Herstellungsprozess, insbesondere auch in nachfolgenden Prozessschritten, vermindert wird.

Vorgeschlagen wird ein Verfahren zur Herstellung eines Wert- und/oder Sicherheitsdokuments mit einer Antennenstruktur, insbesondere eines laminierten Wert- und/oder Sicherheitsdokuments mit einer Datenübertragungseinrichtung.

Die Datenübertragungseinrichtung des Wert- und/oder Sicherheitsdokuments kann hierbei mindestens eine Antennenstruktur und mindestens ein elektronisches Bauelement umfassen.

Das Wert- und/oder Sicherheitsdokuments kann beispielsweise als Smartcard oder Identifikationsdokument ausgebildet sein. Beispielsweise kann das Dokument ein Personalausweis, Reisepass, Zugangsausweis, Führerschein, Fahrzeugbrief, Fahrzeugschein, Firmenausweis, Mitgliedsausweis, Skipass oder ein sonstiger Berechtigungsausweis, ein Ticket im öffentlichen Personen-Nahverkehr, eine Banknote, Kreditkarte, Scheckkarte, Barzahlungskarte, Eintrittskarte, Bonuskarte, Identifikationskarte, ein Visum oder dergleichen sein. Das Dokument kann in Form einer Karte mit einer Vorderseite und einer Rückseite vorliegen oder als buchartiges Dokument ausgebildet sein. Es kann im Wesentlichen aus Papier oder auch aus Kunststoff hergestellt sein. Im Falle eines Personalausweises trägt dessen Vorderseite zum Beispiel das Lichtbild sowie den Namen des Inhabers. Die Rückseite kann weitere Angaben enthalten, beispielsweise die Anschrift des Inhabers. Das Dokument kann als Transponder, insbesondere als passiver Transponder, beispielsweise als RFID-Sicherheitsdokument, ausgebildet sein.

Das Wert- und/oder Sicherheitsdokument kann hierbei eine kontaktlose Datenübertragungseinrichtung beinhalten. Diese kontaktlose Datenübertragungseinrichtung weist hierbei die mindestens eine Antennenstruktur und das elektronisches Bauelement auf, welches elektrisch mit der Antennenstruktur verbunden ist.

Es ist eine Grundidee der Erfindung, dass bildbasiert Rissstrukturen in der Antennenstruktur der Datenübertragungseinrichtung detektiert werden. Abhängig von einem Rissparameter, beispielsweise einer Anzahl der Risse, einer Größe und/oder einer Breite des Risses/der Risse, wird dann ein rissparameterabhängiges Qualitätskriterium ausgewertet.

Das Verfahren umfasst folgende Verfahrensschritte:

### 1. Bereitstellen eines Trägerkörpers.

Der Trägerkörper kann z.B. als Kunststofflage ausgebildet sein. Insbesondere kann der Trägerkörper ein elektrisch isolierender Trägerkörper sein.

Die Kunststofflage bzw. mehrere oder alle Lagen des Dokuments kann/können aus einem Polymer, das ausgewählt ist aus einer Gruppe, umfassend Polycarbonat (PC), insbesondere Bisphenol A-Polycarbonat, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-Styrol-Copolymer (ABS) sowie deren Derivate, und/oder Papier, hergestellt werden. Außerdem kann das Dokument oder die Kunststofflage auch aus mehreren dieser Materialien hergestellt sein. Bevorzugt besteht die Kunststofflage oder das Dokument aus PC oder PC/TPU/PC. Die Polymere können entweder ungefüllt oder gefüllt vorliegen. Im ungefüllten Falle sind sie vorzugsweise transparent oder transluzent. Falls die Polymere gefüllt sind, sind sie opak. Das Füllmaterial kann beispielsweise ein Pigment sein oder ein Füllmaterial, das eine besonders hohe oder eine besonders niedrige Dielektrizitätskonstante aufweist. Durch eine geeignete Wahl des Füllmaterials können die elektrischen Eigenschaften des Schaltkreiselements beeinflusst werden. Bevorzugt wird das Dokument aus 3 bis 12, vorzugsweise 4 bis 10 Kunststofflagen (einschließlich des Trägerkörpers der Datenübertragungseinrichtung), die z.B. als Folien ausgebildet sind, hergestellt.

Ein die Kunststofflage enthaltendes Dokument kann aus diesen Materialien insbesondere durch Lamination hergestellt werden. Typischerweise wird die Lamination von PC in einer Laminierpresse bei 170 bis 200 °C und einem Druck von 50 bis 600 N/cm² hergestellt.

### 2. Aufbringen einer Antennenstruktur auf den Trägerkörper.

Die Antennenstruktur kann z.B. als ein auf dem Trägerkörper angeordnetes Schaltkreiselement ausgebildet sein, das einen durchgehenden Antennen-Leiterzug in Form mindestens einer Spiralwindung, beispielsweise von einer, zwei, drei, vier, fünf, sechs, sieben, acht oder noch mehr Spiralwindungen, und jeweils einen Anschlusskontakt zur elektrischen Kontaktierung eines elektronischen Bauelements aufweist. Das Schaltkreiselement dient zur induktiven Einkopplung von Energie, die von einem Schreib-/ Lesegerät erzeugt wird.

Anschlusskontakte können hierbei an den Enden des Antennen-Leiterzuges angeordnet sein. Es ist jedoch auch möglich, dass ein Anschlusskontakt entlang eines Verlaufs des Antennen-Leiterzuges und somit nicht am Ende des Antennen-Leiterzuges angeordnet ist, insbesondere wenn der Antennen-Leiterzug einen Blindleiterzug aufweist.

Die Antennenstruktur, insbesondere eine als Leiterzug ausgebildete Antennenstruktur, weist, insbesondere an dessen Enden, jeweils einen Anschlussbereich oder Anschlusskontakt auf, der im Montagebereich zur elektrischen Kontaktierung mit dem elektronischen Bauelement dient. Die Anschlusskontakte können aus demselben Material und mit derselben Verfahrenstechnik hergestellt sein wie die Antennenstruktur.

Das Aufbringen der Antennenstruktur kann durch Aufdrucken auf den Trägerkörper erfolgen, beispielsweise mittels Siebdruck, Tiefdruck oder Flexodruck, insbesondere auch einschließlich der Anschlussbereiche der Antennenstruktur. Die genannten Druckverfahren zeichnen sich hierbei durch einen verhältnismäßig hohen Farbauftrag aus. Hierdurch werden gedruckte Antennen mit einer vergleichsweise hohen Güte aufgrund eines vergleichsweise geringen elektrischen Widerstandes erreicht. Tiefdruck kann insbesondere in den Formen Stichtiefdruck oder Rastertiefdruck erfolgen. Siebdruck in Form von Bogensiebdruck oder Rundsiebdruck ist das bevorzugte Druckverfahren.

Wenn die Antennenstruktur mit einer Leitpaste oder einem Leitlack gebildet ist, kann der elektrische Widerstand der Antennenstruktur durch eine nachträgliche Kompression erniedrigt werden, etwa im Montagebereich des Chips. Dies kann insbesondere durch Ausüben eines Druckes mittels eines Stempels auf die Antennenstruktur erreicht werden.

Die Antennenstruktur ist vorzugsweise in einer Ebene des Dokuments gebildet, indem es auf dem Trägerkörper erzeugt ist. Dadurch kann das Schaltkreiselement in einem Arbeitsgang erzeugt werden.

Insbesondere kann die Antennenstruktur aus einer Leitpaste oder einem Leitlack hergestellt werden. Diese Technik ist einfach und damit kostengünstig realisierbar. Die Leitpaste oder der Leitlack enthält mindestens ein Polymer als Binder sowie mindestens ein Metall und/oder ein leitfähiges Metalloxid und/oder anderes leitfähiges Material in dem Polymer. Als leitfähiges Material kommen Kupfer, Silber, Gold, Eisen, Zink, Zinn oder Kohlenstoff, insbesondere Graphit, Singlewall- und/oder Multiwall-Nanotubes, Fullerene oder Graphene in Betracht. Als Metalloxide kommen ITO (Indium-Zinn-Oxid), IZO, FTO (Fluor-dotiertes Zinndioxid), ATO (Antimonoxid) in Betracht. Die Metalle/Metalloxide können in Form von Flakes, Nadeln, Pulver (insbesondere nanoskalig), Plättchen oder dergleichen vorliegen. Insbesondere liegen diese als aggregierte Partikel vor. Als ein anderes leitfähiges Material kommen leitfähige organische Materialien/Polymere, z.B. Polyanilin, PEDOT:PSS, in Betracht. Zur Erzeugung der Antennenstruktur mit der Leitpaste oder dem Leitlack kann eine Siebdrucktechnik eingesetzt werden, beispielsweise Bogendruck, oder ein Rolle-Rolle-Druckverfahren. Die Dicke der aufgedruckten Paste oder des Lacks kann insbesondere1 µm bis 100 µm und besonders bevorzugt etwa 10 µm betragen. Die Leitpaste oder der Leitlack kann entweder einfach getrocknet werden oder mittels Wärme und/oder Bestrahlung mit elektromagnetischer Strahlung, beispielsweise UV-Strahlung, aushärtbar sein.

Verwendet werden können auch die Druckverfahren des Tiefdrucks, insbesondere Stichtiefdruck, auch Intaglio genannt, sowie Rastertiefdruck, Flachdruck, insbesondere Offset, Hochdruck, insbesondere Letterset, Durchdruck, insbesondere Siebdruck, Flexodruck oder Digitaldruckverfahren, insbesondere Inkjet. Bevorzugt sind Siebdruck, Tiefdruck sowie Flexodruck, besonders bevorzugt Siebdruck.

Alternativ kann die Antennenstruktur auch in einer anderen Technik hergestellt sein, beispielweise in einer Ätztechnik aus Aluminium oder Kupfer mittels eines Ätzresists oder in einem Pattern-Plating-Verfahren. Bei Pattern-Plating-Verfahren werden, ausgehend von einer Grundmetallisierung, beispielsweise aus Kupfer, mit einem Platingresist auf der Grundmetallisierung zunächst die Strukturen als Kanäle geformt. Dann wird zusätzliches Metall in den Kanälen galvanotechnisch abgeschieden. Nach dem Entfernen des Platingresists wird die Grundmetallisierung zwischen den Strukturen durch Ätzen entfernt.

Beispielsweise kann das Wert- und/oder Sicherheitsdokument mindestens zwei miteinander durch Laminieren verbundene Kunststofflagen aufweisen, wobei eine der Lagen eine kontaktlose Datenübertragungseinrichtung mit der Antennenstruktur bildet oder beinhaltet. Der Trägerkörper, insbesondere ein elektrisch isolierender Trägerkörper der Datenübertragungseinrichtung kann ebenfalls aus Kunststoff hergestellt sein. Alternativ kann das Dokument auch durch Vergießen der elektronischen Komponenten (kontaktlose Datenübertragungseinrichtung mit Chip, Antenne) in Kunststoff hergestellt sein.

### 3. Erzeugen eines Durchleuchtungsbildes zumindest eines Abschnitts der Antennenstruktur.

Hierbei kann von dem Trägerkörper und der darauf angeordneten Antennenstruktur ein Durchleuchtungsbild erzeugt werden.

Das Durchleuchtungsbild kann z.B. röntgenbasiert erzeugt werden, wobei eine Röntgeneinrichtung ein Röntgenbild von dem Trägerkörper und der darauf aufgebrachten Antennenstruktur erzeugt. Die Röntgeneinrichtung kann beispielsweise eine mobile Röntgeneinrichtung sein, wobei die Röntgeneinrichtung derart relativ zu dem Trägerkörper bewegt wird, dass ein vorbestimmter Zielbereich des Trägerkörpers abgebildet wird. Auch ist vorstellbar, dass die Röntgeneinrichtung eine ortsfest angeordnete Röntgeneinrichtung ist, wobei z.B. eine Positioniereinrichtung den Trägerkörper oder einen Bogen, der n x m Dokumente, also Trägerkörper mit jeweils aufgebrachten Antennenstrukturen, umfasst, derart relativ zur Röntgeneinrichtung positioniert, dass ein vorbestimmter Zielbereich des Trägerkörpers abgebildet wird. Ist der mit einer Antennenstruktur bestückte Trägerkörper in einem Bogen von mehreren solcher Dokumente oder Nutzen enthalten, so kann das vorgeschlagene Verfahren sequenziell für verschiedene Teilbereiche eines Dokuments oder für mehrere, insbesondere alle, Dokumente des Bogens durchgeführt werden. Hierzu kann z.B. die vorhergehend erwähnte Positioniereinrichtung den Bogen sequenziell derart relativ zu der Röntgeneinrichtung positionieren, dass gewünschte Zielbereiche eines Dokuments oder verschiedener Dokumente abgebildet werden.

Das Durchleuchtungsbild kann ein pixelbasiertes Durchleuchtungsbild sein, welches z.B. a x b Pixel umfasst. Jedem Pixel kann hierbei mindestens ein Intensitätswert, insbesondere ein Grauwert, bei der Bilderzeugung zugeordnet werden. Wird ein Farbbild erzeugt, z.B. ein RGB-Bild, so können Durchleuchtungsbilder in verschiedenen Farbkanälen erzeugt werden, deren Pixel wiederum Intensitätswerte der einzelnen Farben zugeordnet werden. Wird das Durchleuchtungsbild röntgenbasiert erzeugt, so werden z.B. Bereiche des Trägerkörpers mit der Antennenstruktur, die verhältnismäßig wenig Röntgenstrahlung absorbieren, hell, also mit einem hohen Grauwert, dargestellt. Entsprechend werden Bereiche, die viel Röntgenstrahlung absorbieren, dunkel, also mit einem niedrigen Grauwert, dargestellt.

Das Durchleuchtungsbild kann, wie vorhergehend erläutert, auch in einer Durchleuchtungseinrichtung aufgenommen werden, in welcher eine Durchleuchtungsquelle, bevorzugt eine Röntgenquelle, sowie ein Detektor, bevorzugt ein Zeilendetektor, ortsfest angeordnet sind. Der Trägerkörper kann in diesem Fall in einen Erfassungsbereich der Durchleuchtungseinrichtung eingebracht oder durch den Erfassungsbereich hindurchgeführt werden, z.B. durch eine Positioniereinrichtung zur Positionierung des Trägerkörpers oder einen den Trägerkörper umfassenden Bogen. Insbesondere kann der Trägerkörper derart in den Erfassungsbereich eingebracht werden oder durch den Erfassungsbereich hindurchgeführt werden, dass der Trägerkörper zeilenweise abgebildet werden kann. In diesem Fall arbeitet die Durchleuchtungseinrichtung nach dem Prinzip eines Zeilenscanners. Zeilenweise kann z.B. bedeuten, dass eine Abbildung von einem Teilbereich des Trägerkörpers in eine eindimensionale Reihenfolge von Bildpunkten (Zeile) erfolgt, beispielsweise von einem rechteckigen Teilbereich, dessen Längsachse quer zu einer Transportrichtung des Trägerkörpers orientiert ist. Hierbei werden durch Transport des Trägerkörpers in Transportrichtung Teilbereiche, die in Transportrichtung benachbart sind, in verschiedene Zeilen abgebildet. Der rechteckige Teilbereich kann hierbei eine größere Dimension entlang der Längsrichtung als in Transportrichtung aufweisen. Dies ermöglicht in vorteilhafter Weise eine gute Einbindung der Erzeugung des Durchleuchtungsbildes in einen kontinuierlichen Herstellungsprozess und ist daher bevorzugt.

Da die Antennenstruktur aus einem Material ausgebildet ist, welches verhältnismäßig viel Röntgenstrahlung absorbiert, sind Bildbereiche, in die die Antennenstruktur abgebildet ist, in Relation zu anderen Bildbereichen z.B. mit niedrigen Grauwerten dargestellt, was eine gute Erkennbarkeit der Antennenstruktur gewährleistet.

### 4. Bestimmen zumindest eines Bildbereiches, in dem der zumindest eine Abschnitt der Antennenstruktur oder ein Teil des Abschnitts abgebildet ist.

Hierbei erfolgt eine Segmentierung von einem oder mehreren Bildbereichen, in den/die die Antennenstruktur oder ein Teil davon abgebildet ist/sind.

Hierfür kann eine Vielzahl von existierenden Segmentierungsverfahren angewendet werden. So kann z.B. ein intensitätswertbasiertes Segmentierverfahren angewendet werden, wobei in einem intensitätswertbasierten Segmentierverfahren eine Zerlegung des Bildes in Bildbereiche in Abhängigkeit der Intensitätswerte der einzelnen Pixel durchgeführt wird. Beispielsweise kann eine histogrammbasierte Segmentierung durchgeführt werden. Auch können Segmentierungsverfahren entsprechend so genannter Homogenitätskriterien durchgeführt werden, wobei Bildbereiche zusammengefasst werden, in denen eine Intensitätswertverteilung vorbestimmten Homogenitätskriterien entspricht. Auch können Segmentierungsverfahren nach so genannten Diskontinuitätskriterien durchgeführt werden, insbesondere kantenbasierte Segmentierungsverfahren. Hierbei können Kantenpixel als lokale Maxima in Gradientenrichtung bzw. Nulldurchgänge einer zweiten Ableitung eines Intensitätswertverlaufs detektiert werden. Ein Segment kann z.B. als von Kantenpixeln oder von zu Kantenzügen zusammengefassten Kantenpixeln eingeschlossenen Bildbereich bestimmt werden.

Das Bestimmen des Bildbereiches, in dem die Antennenstruktur oder ein Teil davon abgebildet ist, kann auch in Abhängigkeit vorbekannter geometrischer Dimensionen und/oder Verläufe der Antennenstruktur erfolgen. Umfasst die Antennenstruktur z.B. mehrere parallel verlaufende Leiterzüge, so können Bildbereiche detektiert werden, deren Kantenzüge parallel oder annähernd parallel verlaufen, wobei die von den Kantenzügen eingeschlossenen Bildbereiche z.B. niedrige Intensitätswerte aufweisen. Auch ist möglich, dass ein Suchbereich im Durchleuchtungsbild in Abhängigkeit vorbekannter geometrischer Referenzstrukturen des Trägerkörpers bestimmt wird. Ist eine geometrische relative Lage und/oder Ausrichtung von Antennenstrukturen zu den Referenzstrukturen bekannt, so kann ein Suchbereich in Abhängigkeit dieser vorbekannten relativen Lage und/oder Orientierung definiert werden, wobei die Segmentierung dann, z.B. ausschließlich, in dem Suchbereich durchgeführt wird.

Auch kann das Bestimmen zumindest eines Bildbereiches oder des vorhergehend erläuterten Suchbereiches in Abhängigkeit von Erfahrungswerten erfolgen, die z.B. in vorhergehenden Verfahren gewonnen und gespeichert wurden. So kann z.B. in vorhergehenden Verfahren gespeichert werden, in welchem Teilbereich des Bildes die jeweilige gesuchte Antennenstruktur abgebildet wurde. Ein Suchbereich in einem aktuell erzeugten Durchleuchtungsbild kann dann in Abhängigkeit der Lage und/oder Orientierung dieser vorbekannten Teilbereiche bestimmt werden.

### 5. Detektion von Rissstrukturen in dem Bildbereich.

Zur Detektion von Rissstrukturen in dem Bildbereich können ebenfalls Segmentierungsverfahren durchgeführt werden. Hierzu wird auf die vorhergehenden Erläuterungen zur Bestimmung von Bildbereichen, in die die Antennenstruktur oder Teile davon abgebildet sind, verwiesen, die entsprechend zur Bestimmung von Rissstrukturen angewendet werden können.

### 6. Bestimmen mindestens eines Rissparameters, falls mindestens eine Rissstruktur detektiert wird.

Der Rissparameter kann hierbei z.B. eine Anzahl detektierter Rissstrukturen sein. Auch ist möglich, dass als Rissparameter eine maximale Breite, eine maximale Höhe und/oder eine Fläche des Risses bestimmt wird/werden. Hierbei wird eine Breite im Durchleuchtungsbild als eine Breite in horizontaler Richtung des Durchleuchtungsbildes verstanden. Eine Höhe wird im Durchleuchtungsbild als eine Höhe in vertikaler Richtung des Durchleuchtungsbildes verstanden.

### 7. Auswertung eines rissparameterabhängigen Qualitätskriteriums.

Das rissparameterabhängige Qualitätskriterium kann beispielsweise erfüllt sein, wenn eine Anzahl von Rissen kleiner als eine vorbestimmte Anzahl ist. Alternativ oder kumulativ kann das rissparameterabhängige Qualitätskriterium erfüllt sein, wenn eine maximale Breite eines Risses und/oder eine maximale Höhe eines Risses und/oder eine maximale Fläche eines Risses kleiner als vorbestimmte Schwellwerte sind. Ist das rissparameterabhängige Qualitätskriterium nicht erfüllt, so kann das Dokument als Ausschuss klassifiziert werden.

In diesem Fall kann z.B. der entsprechende Trägerkörper aussortiert werden, wobei er nachfolgende Prozessschritte des Herstellungsverfahrens, beispielsweise eine Bestückung mit einem elektronischen Bauelement, nicht mehr durchläuft. Ist das Qualitätskriterium erfüllt, so kann der Trägerkörper mit der Antennenstruktur nachfolgende Prozessschritte durchlaufen.

Vor der Erzeugung des Durchleuchtungsbildes (Schritt 3) können noch ein oder mehrere der folgenden Prozessschritte durchgeführt werden.

2a. Aufbringen eines elektronischen Bauelements auf den Trägerkörper. Das elektronische Bauelement kann in einem Montagebereich über oder unter einem Abschnitt der Antennenstruktur angeordnet werden.

Hierbei werden unter einem elektronischen Bauelement insbesondere Halbleiterchips verstanden, insbesondere solche, welche zur Speicherung und Verarbeitung von Daten geeignet sind. Insbesondere können die elektronischen Bauelemente elektronische Halbleiterschaltungselemente sein. Die elektronischen Bauelemente umfassen insbesondere sogenannte RFID Chips, welche zur kontaktlosen Kommunikation geeignet sind. RFID-Chips können vergleichsweise einfach sein, z.B. nur eine Seriennummer enthalten und diese bei Aktivierung kontaktlos übermitteln, oder es kann sich um Speicherchips mit Verschlüsselung handeln, wie diese zum Beispiel in elektronischen Reisedokumenten eingesetzt werden. Zur Datenkommunikation mit externen Geräten kann beispielsweise eine Kontaktfeldmatrix mit mehreren Kontaktfeldern gemäß ISO 7816 dienen, die mit dem Chip verbunden sind und die beim Verwenden des Dokuments, beispielsweise einer Karte, über Ein- und Ausgabegeräte einen elektrischen Kontakt zu externen Datenquellen und -speichern herstellen. Gemäß einer Weiterentwicklung von derartigen Wert- und/oder Sicherheitsdokumenten stehen auch kontaktlose Dokumente zur Verfügung, die ebenfalls elektronische Bauelemente zur Datenspeicherung und - verarbeitung enthalten und die über Ein- und Ausgabegeräte für den Datenaustausch mit externen Datenquellen zusätzlich über eine Antenne verfügen. Daten werden in diesem Falle mittels eines Schreib-/Lesegerätes mit den Bauelementen in dem Dokument dadurch ausgetauscht, dass das Schreib-/Lesegerät ein elektromagnetisches Wechselfeld mit einer Trägerfrequenz typischerweise im Radiowellenbereich erzeugt, das von der Antenne im Dokument detektiert und in elektrische Signale umgewandelt wird, die an das Bauelement weitergeleitet werden. Zur Ausgabe von von dem Dokument ausgehenden Daten erzeugt die Antenne ein entsprechendes elektromagnetisches Wechselfeld, das von dem Schreib-/Lesegerät detektiert wird. Derartige Transponder oder RFID-(radio frequency identification) Systeme sind ebenfalls seit einiger Zeit bekannt. Eine kontaktlose Kommunikation kann beispielsweise gemäß ISO 14443 erfolgen.

Das elektronische Bauelement, insbesondere das Halbleiterschaltungselement, kann auch als Chip bezeichnet werden. Dieses Element wird als Datenverarbeitungssystem in dem Dokument eingesetzt, das beispielsweise eine kryptografische Funktion zur Signierung und/oder Authentifizierung, eine Bezahlfunktion oder eine andere Funktion zur Durchführung einer Finanztransaktion oder eine Ausweisfunktion, insbesondere mit Bildwiedergabe auf einer Anzeigevorrichtung, aufweist.

Das elektronische Bauelement und die Antennenstruktur sind vorzugsweise parallel zur Vorder- und Rückseite des Wert- und/oder Sicherheitsdokuments angeordnet, in das die kontaktlose Datenübertragungseinrichtung integriert ist. Der Trägerkörper ist als Dokumentenlage in das Dokument integrierbar. Zusätzlich zu dem Trägerkörper kann ferner eine Ausgleichslage vorgesehen werden, die auf der Seite des Trägerkörpers angeordnet ist, auf der sich auch das elektronische Bauelement befindet, und die eine Aussparung zur Aufnahme des Bauelements aufweist. Die Dicke der Ausgleichslage entspricht vorzugsweise ungefähr der Montagehöhe des Bauelements.

Das elektronische Bauelement kann zwei Kontaktstellen aufweisen und in seinem jeweiligen Montagebereich über z.B. der vorhergehend erwähnten mindestens einen Spiralwindung platziert sein, wobei die mindestens zwei Kontaktstellen des Bauelements mit jeweils einem Anschlusskontakt des Antennen-Leiterzuges elektrisch verbunden sind. Es ist möglich, dass sich mindestens eine Spiralwindung des Antennen-Leiterzuges außerhalb des Montagebereiches in mindestens zwei, beispielsweise zwei, drei oder vier, Spiralwindungsäste verzweigt und zwar zwischen jeweils zwei Verzweigungsstellen einer Spiralwindung. Im Verlauf einer Spiralwindung verzweigt sich diese an einer ersten Verzweigungsstelle beispielsweise in zwei Spiralwindungsäste, und an einer zweiten Verzweigungsstelle werden diese Äste unter Bildung einer einspurigen Spiralwindung wieder zusammengeführt. Dadurch entstehen jeweils zueinander benachbarte Spiralwindungsäste, die gemeinsam eine mehrspurige Spiralwindung bilden. Die Spiralwindungen oder Spiralwindungsäste können beispielsweise parallel zueinander verlaufen.

Das elektronische Bauelement kann insbesondere ein Halbleiterbauelement sein. Das Halbleiterbauelement kann durch einen ungehäusten Halbleiterchip (bare die) gebildet sein. Dies ermöglicht weiter verringerte Kosten bei der Herstellung der erfindungsgemäßen Datenübertragungseinrichtung, da der Chip nicht zunächst in einem Modul montiert werden muss. Alternativ kann das Bauelement aber auch ein gehäustes Bauelement sein, beispielsweise ein Surface Mount Device (SMD) oder ein Chip Scale Package (CSP), oder in einer der folgenden Gehäuseformen: DIP, TQFP, MLF, SOTP, SOT, PLCC, QFN, SSOT, BGA, MOB, oder andere übliche Gehäuseformen vorliegen. Des Weiteren können auch Submodule als Chipträger, basierend auf flexiblen Leiterplatten (Interposa) aus Polyimid, FR4, PC, dünnem Glas, verwendet werden. Das elektronische Bauelement kann mindestens zwei Kontaktstellen aufweisen, die an der Kontaktierungsseite des Bauelements an einander gegenüber liegenden Seiten eines Randes des Elements angeordnet sind.

Eine maximale Dimension, z.B. eine maximale Breite, Höhe (bzw. Länge) und/oder Dicke, des Chips kann bevorzugt kleiner als 100 µm, weiter bevorzugt kleiner als 70 µm, weiter bevorzugt kleiner als 50 µm sein. Eine minimale Dimension, z.B. eine minimale Breite, Höhe und/oder Dicke, des Chips kann bevorzugt größer als 1 µm, weiter bevorzugt größer als 3 µm sein. Z.B. kann der Chip aber auch eine Breite von 2,5 mm, eine Höhe von 3,5 mm und eine Dicke von 50 µm aufweisen. Üblich ist aber eine Breite im Bereich von 1 mm bis 5mm, eine Höhe im Bereich von 1mm bis 5mm und eine Dicke im Bereich bis zu 100µm. Die Dicke bezeichnet hierbei ein Abmaß des Chips senkrecht zu Oberfläche des Trägerkörpers, während die Breite und die Höhe Abmaße der Grundfläche des Chips bezeichnen.

Das elektronische Bauelement, insbesondere das als Halbleiterchip ausgebildetes Bauelement, kann in der Flip-Chip-Technik auf der Antennenstruktur montiert werden. Diese Technik schließt ein, dass das elektronische Bauelement an dessen Kontaktstellen über Kontakthöcker mit nach unten orientierter Kontaktierungsseite des elektronischen Bauelements auf die Antennenstruktur montiert (mechanisch und elektrisch verbunden) wird. Hierzu wird typischerweise ein anisotroper Leitkleber verwendet, der den gesamten Raum zwischen der Kontaktierungsseite des elektronischen Bauelements und der Seite des Trägerkörpers, auf der sich die Antennenstruktur befindet, ausfüllt. Dieser Kleber hat die Eigenschaft, nur in den Bereichen einen elektrischen Kontakt herzustellen, in denen die miteinander in Kontakt zu bringenden Kontaktflächen einander sehr nahe kommen bzw. sich berühren. Durch die Aufbringung von Druck auf die Klebefläche entsteht die Anisotropie der elektrischen Leitfähigkeit. Alternativ kann auch ohne Kleber gearbeitet werden und das elektronische Bauelement unter Druck bei erhöhter Temperatur mit den Anschlusskontakten verbunden werden. Weiter alternativ kann das elektronische Bauelement insbesondere in der Flip-Chip-Technik mittels Lot montiert werden, indem die Kontakthöcker des elektronischen Bauelements beispielsweise durch solder bumps gebildet sind (kollabierte Lothöcker). Besonders bevorzugt ist eine Kontaktierung des elektronischen Bauelements sowohl mittels eines anisotropen Leitklebers als auch durch ein kollabiertes Lot, das von dem anisotropen Leiterkleber umgeben ist. Dies ermöglicht eine sehr gute elektrische Leitfähigkeit und gute mechanische Eigenschaften, z.B. eine hohe Festigkeit. Alternativ können die Kontakthöcker auch aus Nickel mit Goldauflage oder aus Palladium gebildet sein. In diesem Falle wird die Montage ausschließlich mittels des anisotropen Leitklebers vorgenommen. Der anisotrope Leitkleber kann beispielsweise mittels eines Dispensers oder durch Aufdrucken auf den Trägerkörper bzw. die Spiralwindungen aufgebracht werden.
Für die Montage des elektronischen Bauelements auf der Antennenstruktur sind die Lage der Kontakthöcker des Bauelements und die Anschlussbereiche der Antennenstruktur so zueinander anzuordnen, dass sie bei geeigneter Ausrichtung des Bauelements, beispielsweise eines Chips, gegenüber der Antennenstruktur einander direkt gegenüberstehen und daher einander nahe kommen, d.h. praktisch berühren, können. Diese Montagetechnik ist sehr einfach und zuverlässig durchführbar.
Alternativ kann das elektronische Bauelements in den Trägerkörper eingelassen werden, etwa indem eine Aussparung im Trägerkörper erzeugt wird, und das elektronische Bauelement in diese Aussparung in einer Orientierung, in der die Kontaktierungsseite mit den Kontaktstellen des elektronischen Bauelements nach oben zeigt, eingeklebt wird, sodass die Kontaktierungsseite mit der Trägerkörperoberfläche fluchtet. In diesem Fall kann die Antennenstruktur anschließend auf der Kontaktierungsseite des elektronisches Bauelements und der Trägeroberfläche erzeugt werden, beispielsweise durch Aufdrucken.

### 2b. Aufbringen mindestens einer weiteren laminierfähigen Lage,

Die laminierfähige Lage kann insbesondere die vorhergehend erläuterte Ausgleichslage sein. Es ist jedoch auch möglich, dass die laminierfähige Lage eine personalisierte und/oder individualisierte Laminationslage ist. Die personalisierte und/oder individualisierte Laminationslage bezeichnet hierbei eine Lage aus einem laminierfähigen Material, z.B. dem vorhergehend erläuterten Kunststoff, welche das Wert- und/oder Sicherheitsdokument individualisierende Informationen und/oder eine zur Führung des Sicherheitsdokuments autorisierte Person personalisierende Informationen enthält. Diese Informationen können z.B. als Sicherheitsmerkmale in der personalisierten und/oder individualisierten Laminationslage enthalten sein. Solche Informationen können beispielsweise ein Name, eine Dokumenten- oder Seriennummer, eine Unterschrift, ein Lichtbild oder eine Hologramm sein.

### 2c. Laminieren des entstehenden Lagenverbundes zu einem Laminat

Bei der Lamination wird thermische Energie in den Lagenverbund eingeleitet und/oder Druck auf den Lagenverbund aufgebracht. Das Laminat bezeichnet hierbei einen Gegenstand, der nach dem Laminieren des aus verschiedenen Lagen bestehenden Lagenverbundes entsteht. Das Laminat kann hierbei beispielsweise das fertige Wert- und/oder Sicherheitsdokument ausbilden.

Nach der Lamination kann ein Durchleuchtungsbild von mindestens einem Bereich des Laminats erzeugt werden, in dem zumindest ein Abschnitt der Antennenstruktur angeordnet ist.

Insbesondere beim Aufbringen des elektronischen Bauelements und/oder beim Laminieren können durch das Einleiten von thermischer Energie und/oder durch die Aufbringung von Druck Risse in der bereits aufgebrachten Antennenstruktur entstehen. Diese Risse können eine Qualität der Datenübertragung von oder zu dem Wert- und/oder Sicherheitsdokument verschlechtern oder eine solche Signalübertragung unmöglich machen. Das vorgeschlagene Verfahren ermöglicht in vorteilhafter Weise eine bildbasierte Bestimmung von Rissstrukturen und eine Auswertung eines von Rissparametern dieser Rissstrukturen abhängigen Qualitätskriteriums. Hierdurch ist es möglich, bildbasiert eine Funktionsfähigkeit von einer Datenübertragungseinrichtung eines Wert- und/oder Sicherheitsdokuments zu überprüfen und fehlerhafte Wert- und/oder Sicherheitsdokumente als Ausschuss zu klassifizieren.

In einer weiteren Ausführungsform wird eine Anzahl der Rissstrukturen und/oder eine maximale Rissbreite pro Rissstruktur und/oder eine maximale Risshöhe pro Rissstruktur und/oder eine Rissfläche pro Rissstruktur und/oder eine kumulierte Rissbreite und/oder eine kumulierte Risshöhe und/oder eine kumulierte Rissfläche bestimmt. Kumulierte Größen bezeichnen hierbei eine Summe oder einen Mittelwert des entsprechenden Rissparameters für alle Risse.

So ist es beispielsweise möglich, dass eine Antennenstruktur, die eine einzelne Rissstruktur mit einer großen Rissfläche aufweist, noch funktionsfähig ist, während eine Antennenstruktur, die viele Rissstrukturen mit einer jeweils geringeren Rissfläche aufweisen und wobei eine Summe dieser Rissflächen größer als die Rissfläche der einzelnen Rissstruktur ist, nicht mehr funktionsfähig ist.

Hierbei kann eine Rissbreite, eine Risshöhe und/oder eine Rissfläche bildbasiert, beispielsweise pixelabhängig, bestimmt werden.

Auch kann zusätzlich mindestens eine Referenzstruktur mit vorbekannten geometrischen Eigenschaften im Durchleuchtungsbild abgebildet werden. Geometrische Eigenschaften können z.B. tatsächliche Dimensionen, z.B. eine tatsächliche Breite, eine tatsächliche Höhe und/oder eine tatsächliche Dicke, umfassen. Die Referenzstruktur kann hierbei ebenfalls auf dem Trägerkörper angeordnet sein. Selbstverständlich ist es auch vorstellbar, dass die Referenzstruktur nicht auf dem Trägerkörper angeordnet ist und beispielsweise von außen in den Erfassungsbereich der Einrichtung zur Erzeugung des Durchleuchtungsbildes eingebracht wird.

Die Referenzstruktur ermöglicht hierbei eine Ermittlung eines Zusammenhangs zwischen bildbasierten geometrischen Eigenschaften, beispielsweise bildbasierten Dimensionen, und tatsächlichen geometrischen Eigenschaften. Die Referenzstruktur ermöglicht somit in vorteilhafter Weise eine Ermittlung eines Abbildungsmaßstabs von im Durchleuchtungsbild abgebildeten Strukturen. In Abhängigkeit des Abbildungsmaßstabes lässt sich dann in vorteilhafter Weise eine tatsächliche Breite, Höhe und/oder Fläche einer Rissstruktur bestimmen.

Hierdurch wird in vorteilhafter Weise eine einfache Bestimmung von Parametern, die eine oder mehrere Rissstrukturen charakterisieren, ermöglicht.

In einer weiteren Ausführungsform wird die mindestens eine Rissstruktur mittels einer Binarisierung detektiert.

Beispielsweise kann ein Mittelwert einer Intensitätswertverteilung der Intensitätswerte der Pixel in dem Bildbereich, in dem die Antennenstruktur oder ein Teil davon abgebildet ist, bestimmt werden. Ein Schwellwert für die Binarisierung kann dann in Abhängigkeit des derart bestimmten Mittelwerts bestimmt werden. Beispielsweise kann der Schwellwert auf einen vorbestimmten Prozentsatz des Mittelwertes, beispielsweise 50 %, festgelegt werden. Hierbei werden alle Bildpunkte des Bildbereiches, in dem die Antennenstruktur oder zumindest ein Teil davon abgebildet ist und deren Intensitätswert kleiner als der Schwellwert der Binarisierung ist, auf einen Intensitätswert "1" gesetzt. Die verbleibenden Bildpunkte werden auf einen Intensitätswert "0" gesetzt. Somit werden Rissstrukturen detektiert, wenn eine Schichtdicke der Antennenstruktur, für die der Intensitätswert repräsentativ ist, kleiner als 50 % der mittleren Schichtdicke der Antennenstruktur beträgt. Diese Strukturen werden im binarisierten Bild beispielsweise als weiße Strukturen dargestellt.

Dies erlaubt eine einfache Detektion von Rissstrukturen in dem Durchleuchtungsbild, insbesondere eine einfache Segmentierung. Beispielsweise kann dann im binarisierten Bild eine einfache intensitätswertbasierte oder eine basierte Segmentierung der Rissstrukturen erfolgen. Hierzu können Kantenpixel detektiert werden, wobei ein zwischen Kantenpixeln liegender Bereich, dessen Bildpunkte den Intensitätswert "1" aufweisen, als zu einer Rissstruktur zugehörig klassifiziert werden kann.

Das vorgeschlagene Verfahren ermöglicht in vorteilhafter Weise eine einfache, zuverlässige und robuste Detektion von Rissstrukturen.

Selbstverständlich ist es auch vorstellbar, Rissstrukturen ohne eine Binarisierung zu detektieren. Insbesondere kann auch eine kantenbasierte Segmentierung in dem nicht binarisierten Durchleuchtungsbild zur Bestimmung von Rissstrukturen durchgeführt werden.

In einer weiteren Ausführungsform wird zur Detektion von Rissstrukturen in dem Bildbereich, in dem zumindest ein Abschnitt der Antennenstruktur oder ein Teil des Abschnitts abgebildet ist, eine Kantendetektion durchgeführt.

Eine Kantendetektion kann z.B. in Abhängigkeit eines Intensitätswertverlaufes entlang einer Bildlinie, z.B. einer Bildzeile oder Bildspalte, des gesamten Durchleuchtungsbildes oder eines Suchbereiches des Durchleuchtungsbildes erfolgen. Eine Kante oder ein Kantenpixel kann z.B. bestimmt werden, wenn die Intensität unter einen vorbestimmten Schwellwert sinkt oder über einen vorbestimmten Schwellwert steigt und/oder eine erste Ableitung des Intensitätswertverlaufs ein Maximum aufweist und/oder eine zweite Ableitung des Intensitätswertverlaufs einen Nulldurchgang aufweist.

Dies ermöglicht in vorteilhafter Weise eine einfache Bestimmung eines Bildbereiches, in den eine Rissstruktur abgebildet ist.

In einer weiteren Ausführungsform wird ein Durchleuchtungsbild von mindestens einem Bereich des Trägerkörpers erzeugt, in dem ein Sicherheitsmerkmal und/oder -element des Wert- und/oder Sicherheitsdokuments unter oder über der Antennenstruktur angeordnet ist. In diesem Zusammenhang bedeutet unter oder über, dass das Sicherheitsmerkmal und/oder -element in einer zur Oberfläche des Trägerkörpers, auf der die Datenübertragungseinrichtung angeordnet ist, senkrechten Richtung unter oder über der Antennenstruktur angeordnet ist.

Insbesondere kann nach der Lamination ein Durchleuchtungsbild von mindestens einem Bereich des Laminats erzeugt werden, in dem ein Sicherheitsmerkmal und/oder -element des Wert- und/oder Sicherheitsdokuments unter oder über der Antennenstruktur angeordnet ist.

Sicherheitsmerkmale sind solche Merkmale, die ein Verfälschen und/oder Duplizieren gegenüber einem einfachen Kopieren zumindest erschweren. Physikalische Entitäten, die ein Sicherheitsmerkmal umfassen oder ausbilden, werden als Sicherheitselemente bezeichnet. Ein Sicherheitsdokument kann mehrere Sicherheitsmerkmale und/oder Sicherheitselemente umfassen. Im Sinne der hier festgelegten Definition stellt ein Sicherheitsdokument auch immer ein Sicherheitselement dar.

Alternativ oder kumulativ wird ein Durchleuchtungsbild von einem Bereich des Trägerkörpers oder Laminats erzeugt, in dem zumindest ein Abschnitt der Antennenstruktur und das elektronische Bauelement angeordnet sind.

Diese Bereiche können auch als Überschneidungsbereiche bezeichnet werden. Hierbei können Durchleuchtungsbilder insbesondere von Überschneidungsbereichen mit einem Holofaden, einem Holopatch, einer CLI-Linsenstruktur (Changeable Laser Image Linsenstruktur), mit einem Klebermeniskus und/oder mit einem Durchsichtsfenster oder weiteren Sicherheitsmerkmalen und/oder -elementen erzeugt werden.

Hierdurch ergibt sich in vorteilhafter Weise, dass insbesondere Überschneidungsbereiche, in denen sich die während der Lamination eingespeiste thermische Energie und der aufgebrachte Druck besonders stark auf die Antennenstruktur auswirken können, gezielt kontrolliert werden.

In einer weiteren Ausführungsform wird eine bildbasierte Orientierung der Antennenstruktur oder von Teilen der Antennenstruktur bestimmt, wobei zusätzlich ein orientierungsabhängiges Qualitätskriterium ausgewertet wird.

Vorstellbar ist beispielsweise, dass eine oder mehrere Referenzlinien der Antennenstruktur bestimmt wird/werden, wobei ein Winkel, den diese Referenzlinie mit z.B. einer oberen Bildzeile einschließt, bestimmt wird. Auch kann eine Orientierung der Referenzlinse in einem Bildkoordinatensystem bestimmt werden.

Umfasst die Antennenstruktur beispielsweise mehrere parallel verlaufende Leiterzüge, Spiralwindungen und/oder Spiralwindungsäste, so kann eine Referenzlinie z.B. als Mittellinie des Bildbereiches bestimmt werden, in den der entsprechende Leiterzug, die entsprechende Spiralwindung und/oder der entsprechende Spiralwindungsast abgebildet ist. Als Referenzlinie können auch ein oder mehrere Kantenlinien der vorhergehend genannten Strukturen bestimmt werden. Dies ist insbesondere dann vorteilhaft, wenn im Durchleuchtungsbild ein linearer, also gerader, Abschnitt der Antennenstruktur, des Leiterzuges, der Spiralwindung oder eines Spiralwindungsastes abgebildet ist.

Selbstverständlich sind auch andere Verfahren zur Bestimmung einer Referenzlinie vorstellbar.

Bildbasiert bedeutet hierbei, dass die Orientierung in einem Bildkoordinatensystem bestimmt wird. Auch ist es möglich, dass eine Orientierung relativ zu einer abgebildeten Referenzstruktur bestimmt wird.

Eine Orientierung der Antennenstruktur erlaubt hierbei einen Rückschluss auf eine Qualität des Aufbringverfahrens, beispielsweise eine Qualität des Siebes in einem Siebdruckverfahren. Auch kann/können sich die Orientierung der Antennenstruktur oder von Teilen der Antennenstruktur durch der Aufbringung der Antennenstruktur nachfolgende Prozessschritte, beispielsweise eine Lamination, verändern.

Ein Qualitätskriterium kann beispielsweise nicht erfüllt sein, wenn die Orientierung um mehr als ein vorbestimmtes Maß von einer vorbestimmten Orientierung abweicht, insbesondere von einer Orientierung, die relativ zu einer Referenzstruktur bestimmt wird.

Können mehrere Bildbereiche bestimmt werden, die jeweils verschiedene Abschnitte der Antennenstruktur abbilden, so kann für jeden dieser Bildbereiche eine bildbasierte Orientierung bestimmt werden. In diesem Fall kann eine Abweichung zwischen den Orientierungen der verschiedenen Bildbereiche bestimmt werden. Ein Qualitätskriterium kann beispielsweise nicht erfüllt sein, wenn mindestens eine Abweichung kleiner als ein vorbestimmtes Maß oder größer als ein vorbestimmtes Maß ist oder außerhalb mindestens eines vorbestimmten Orientierungsbereiches liegt. Weist die Antennenstruktur z.B. mehrere parallel verlaufende Abschnitte auf, so kann das Qualitätskriterium beispielsweise dann nicht erfüllt sein, wenn die Abweichung größer als ein vorbestimmtes Maß ist, da dann die gewünschte Parallelität der Abschnitte der Antennenstruktur nicht mehr gegeben ist.

In einer weiteren Ausführungsform umfasst die Antennenstruktur einen ersten Abschnitt, beispielsweise einen ersten Leiterzug, eine erste Spiralwindung oder einen ersten Spiralwindungsast, und mindestens einen weiteren Abschnitt, beispielsweise einen weiteren Leiterzug, eine weitere Spiralwindung oder einen weiteren Spiralwindungsast.

Hierbei wird ein erster Bildbereich bestimmt, in dem der erste Abschnitt oder ein Teil des ersten Abschnitts abgebildet ist. Weiter wird eine bildbasierte Orientierung des ersten Abschnitts bestimmt. Weiter wird ein weiterer Bildbereich bestimmt, in dem der weitere Abschnitt oder ein Teil des weiteren Abschnitts abgebildet ist, wobei eine bildbasierte Orientierung des weiteren Abschnitts bestimmt wird. Insbesondere können die Abschnitte parallel zueinander verlaufen. Ein Qualitätskriterium kann beispielsweise dann nicht erfüllt sein, wenn die bildbasierte Orientierung des ersten Abschnitts um mehr als ein vorbestimmtes Maß von der bildbasierten Orientierung des weiteren Abschnitts abweicht, da dann die gewünschte Parallelität nicht mehr gegeben ist.

In einer weiteren Ausführungsform kann eine bildbasierte Orientierung der Antennenstruktur für mehrere Dokumente bestimmt werden. Ein Dokument bezeichnet hierbei einen Trägerkörper mit einer Antennenstruktur. Auch kann das Dokument ein elektronisches Bauelement enthalten und/oder sich bereits in einem laminierten Zustand befinden. Das Dokument kann hierbei auch als Nutzen eines Bogens bezeichnet werden, der n x m Dokumente enthalten kann. Hierbei wird im Herstellungsprozess ein Bogen mit n x m Dokumenten bereitgestellt, wobei auf jedes Dokument jeweils eine Antennenstruktur aufgebracht wird.

Das vorgeschlagene Verfahren kann hierbei für einen, mehrere oder alle Dokumente eines Bogens durchgeführt werden. Selbstverständlich kann das vorgeschlagene Verfahren auch für Nutzen verschiedener Bogen durchgeführt werden.

Durch die Bestimmung von Orientierungen von Antennenstrukturen verschiedener Dokumente kann hierbei in vorteilhafter Weise eine Abweichung der Anordnung von Antennenstrukturen in verschiedenen Dokumenten bestimmt werden.

Auch können Orientierungen von Antennenstrukturen verschiedener Dokumente eines Streifens bestimmt werden, wobei ein Streifen 1 x k Dokumente enthalten kann.

Die vorhergehend beschriebenen Ausführungsformen zur Bestimmung der Orientierung der Antennenstruktur von mindestens einem Dokument sind unabhängig von einer Rissdetektion und bilden eine eigenständige und unabhängige Erfindung. Diese kann auch ohne die vorhergehend beschriebene Rissdetektion durchgeführt werden. Insbesondere kann die Bestimmung einer Orientierung durchgeführt werden, nachdem die Antennenstruktur auf einen Trägerkörper aufgebracht wurde. So kann beispielsweise die Orientierung der Antennenstruktur vor einer Bestückung mit einem elektronischen Bauelement oder vor einer Lamination bestimmt werden.

In einer weiteren Ausführungsform umfasst das Verfahren folgende Verfahrensschritte:
1. Bereitstellen eines ersten Trägerkörpers,
2. Aufbringen einer ersten Antennenstruktur auf den ersten Trägerkörper in Abhängigkeit mindestens eines antennenspezifischen Aufbringparameters.
   Der Aufbringparameter bezeichnet hierbei einen Parameter, der die Steuerung der Aufbringung der Antennenstruktur erlaubt. Wird beispielsweise ein Siebdruckverfahren zur Aufbringung der Antennenstruktur durchgeführt, so kann der mindestens eine antennenspezifische Aufbringparameter beispielsweise eine Siebart, eine Rakelgeschwindigkeit, eine Rakelhärte, einen Rakelwinkel, einen Siebabsprung, eine Gewebedicke, eine Emulsionsdicke oder eine Druckgeschwindigkeit bezeichnen. Der Siebabsprung bezeichnet hierbei einen Abstand zwischen einer Siebunterkante und einer Druckgutoberkante. Auch kann eine Stillstandsdauer während eines Druckverfahrens und/oder einer Trocknungsdauer und/oder einer Trocknungstemperatur, von der eine Qualität der Siebdruckpaste abhängig ist, den mindestens einen antennenspezifischen Aufbringparameter bilden.
3. Erzeugen eines Durchleuchtungsbildes zumindest eines Abschnitts der ersten Antennenstruktur,
4. Bestimmen zumindest eines Bildbereichs, in dem der zumindest eine Abschnitt der ersten Antennenstruktur oder ein Teil des Abschnittes abgebildet ist.
5. Detektion von Rissstrukturen in dem Bildbereich,
6. Bestimmung mindestens eines Rissparameters, falls mindestens eine Rissstruktur detektiert wird,
7. Bereitstellen eines weiteren Trägerkörpers,
8. Aufbringen einer weiteren Antennenstruktur auf den weiteren Trägerkörper in Abhängigkeit des mindestens einen antennenspezifischen Aufbringparameters, wobei der mindestens eine antennenspezifische Aufbringparameter in Abhängigkeit des mindestens einen Rissparameters bestimmt wird.

Weiter kann vor der Erzeugung des Durchleuchtungsbildes noch einer oder mehrere der folgenden Verfahrensschritte durchgeführt werden:
2a. Aufbringen eines ersten elektronischen Bauelements auf den ersten Trägerkörper in Abhängigkeit eines bauelementspezifischen Aufbringparameters. Das erste elektronische Bauelement kann z.B. in einem Montagebereich über einem Abschnitt der ersten Antennenstruktur angeordnet werden.
   Der bauelementspezifische Aufbringparameter kann insbesondere ein Positionierparameter einer Positioniereinrichtung sein, welche das elektronische Bauelement bei der Aufbringung relativ zum Trägerkörper bzw. zur Antennenstruktur positioniert. Ein derartiger Positionierparameter kann beispielsweise mindestens einen Verfahrweg der Positioniereinrichtung in Relation zu Rändern des Trägerkörpers umfassen. Sind z.B. auf dem Trägerkörper Positioniermarken angeordnet, so kann der Positionierparameter auch mindestens einen Verfahrweg der Positioniereinrichtung relativ zu diesen Positioniermarken umfassen. Selbstverständlich kann der Positionierparameter auch eine Orientierung, beispielsweise eine Verdrehung, des elektronischen Bauelements relativ zu den Rändern des Trägerkörpers oder den Positioniermarken umfassen.
   Bauelementspezifische Aufbringparameter können jedoch auch noch weitere Aufbringparameter, beispielsweise eine Aufbringgeschwindigkeit, einen Aufbringdruck, und weitere derartige Parameter umfassen.
   Zusammenfassend ergibt sich, dass mittels der Aufbringparameter eine Aufbringung, insbesondere Positionierung, des elektronischen Bauelements relativ zu einem Koordinatensystem des Trägerkörpers bzw. des herzustellenden Dokuments steuerbar ist.
2b. Aufbringen mindestens einer weiteren laminierfähigen Lage auf den ersten Trägerkörper in Abhängigkeit mindestens eines lagespezifischen Aufbringparameters.
   Entsprechend dem bauelementspezifischen Aufbringparameter kann mittels des lagespezifischen Aufbringparameters eine gewünschte Aufbringung, insbesondere Positionierung, der weiteren laminierfähigen Lage relativ zu einem Koordinatensystem des Trägerkörpers bzw. des herzustellenden Dokuments steuerbar sein.
2c. Laminieren des entstehenden Lagenverbundes zu einem Laminat in Abhängigkeit mindestens eines Laminierparameters.

Ein Laminierparameter kann beispielsweise eine Temperatur und/oder ein Druck des Laminierverfahrens sein.

Nach der Lamination kann dann insbesondere ein Durchleuchtungsbildes von mindestens einem Bereich des Laminats, in dem zumindest ein Abschnitt der ersten Antennenstruktur angeordnet ist, erzeugt werden.

Weiter kann nach der Aufbringung der weiteren Antennenstruktur auf den weiteren Trägerkörper (Schritt 8) noch einer oder mehrere der folgenden Verfahrensschritte durchgeführt werden:
8a. Aufbringen eines weiteren elektronischen Bauelements auf den weiteren Trägerkörper in Abhängigkeit des mindestens einen bauelementspezifischen Aufbringparameters.
8b. Aufbringen mindestens einer weiteren laminierfähigen Lage auf dem weiteren Trägerkörper in Abhängigkeit des mindestens einen lagespezifischen Aufbringparameters,
8c. Laminieren des entstehenden Lagenverbundes zu einem Laminat in Abhängigkeit des mindestens einen Laminierparameters.

Hierbei kann der mindestens eine antennenspezifische Aufbringparameter und/oder der mindestens eine bauelementspezifische Aufbringparameter und/oder der mindestens eine lagespezifische Aufbringparameter und/oder der mindestens eine Laminierparameter in Abhängigkeit des mindestens einen Rissparameters bestimmt werden.

Hierdurch ergibt sich in vorteilhafter Weise eine Nachregelung des Herstellungsprozesses in Abhängigkeit des mindestens einen Rissparameters, wodurch die Herstellungsgüte weiter verbessert und der Ausschuss weiter minimiert werden kann. Insbesondere wird eine frühzeitige Erkennung von Abweichungen detektiert und in den Herstellungsprozess rückgekoppelt, sodass eine Anpassung bereits vor dem Entstehen von Ausschuss erfolgt.

Dies ermöglicht in vorteilhafter Weise eine Rückkopplung des mindestens einen Rissparameters in einzelne oder mehrere vorangegangene Prozessschritte. Beispielsweise können die erläuterten Aufbringparameter und/oder der Laminierparameter derart eingestellt werden, dass eine Anzahl von Rissstrukturen reduziert oder minimiert wird. Selbstverständlich können die vorhergehend erläuterten Aufbringparameter und/oder der Laminierparameter derart eingestellt werden, dass eine Abweichung eines der vorhergehend erläuterten Rissparameter von einem gewünschten Rissparameter reduziert oder minimiert wird.

Beispielsweise kann eine Druckgeschwindigkeit bei der Aufbringung der Antennenstruktur und/oder ein Aufbringdruck bei der Aufbringung des elektronischen Bauelements und/oder ein Druck bei Lamination verringert werden, falls zu viele Risse detektiert wurden.

Hierdurch kann in vorteilhafter Weise ein Ausschuss verringert werden.

Hierbei kann z.B. ein optimaler Wertebereich des Rissparameters definiert sein, wobei keine Veränderung des/der Aufbringparameter und/oder des Laminierparameters erfolgt und das Qualitätskriterium erfüllt ist, wenn der aktuell bestimmte Rissparameter in diesem Bereich liegt. In diesem Fall bildet das Dokument keinen Ausschuss und es ist keine Nachregelung erforderlich.

Weiter kann z.B. ein vom optimalen Wertebereich verschiedener Grenzbereich des Rissparameters der Intensitätswertverteilung definiert sein, wobei zwar eine Veränderung des/der Aufbringparameter und/oder des Laminierparameters erfolgt, das Qualitätskriterium jedoch erfüllt ist, wenn der aktuell bestimmte Rissparameter in diesem Bereich liegt. Auch in diesem Fall bildet das Dokument keinen Ausschuss, jedoch ist eine Nachregelung erforderlich.

Weiter kann z.B. ein vom optimalen Wertebereich und vom Grenzbereich verschiedener Ausschussbereich des Parameters der Intensitätswertverteilung definiert sein, wobei eine Veränderung des/der Aufbringparameter und/oder des Laminierparameters erfolgt und das Qualitätskriterium nicht erfüllt ist, wenn der aktuell bestimmte Rissparameter in diesem Bereich liegt. In diesem Fall bildet das Dokument jedoch Ausschuss.

Selbstverständlich können die vorhergehend angeführten Aufbringparameter und/oder der mindestens eine Laminierparameter auch in Abhängigkeit der Orientierung bestimmt werden. Dies erlaubt in vorteilhafter Weise eine Rückkopplung einer bildbasiert bestimmten Orientierung der Antennenstruktur in einzelnen Verfahrensschritten des Herstellungsverfahrens. Auch hierdurch kann ein Ausschuss reduziert werden.

Entsprechend den vorhergehenden Ausführungen zum optimalen Bereich, Grenzbereich und Ausschussbereich des Rissparameters können ebenfalls ein optimaler Bereich, ein Grenzbereich und ein Ausschussbereich für die Orientierung definiert sein, wobei in Abhängigkeit eines Werts der aktuellen Orientierung relativ zu diesen Bereichen eine oder keine Veränderung des/der Aufbringparameter und/oder des Laminierparameters erfolgen kann und das Qualitätskriterium erfüllt oder nicht erfüllt sein kann.

Weiter vorgeschlagen wird eine Vorrichtung zur Herstellung eines Wert- und/oder Sicherheitsdokuments mit einer Antennenstruktur, insbesondere zur Herstellung eines laminierten Wert- und/oder Sicherheitsdokuments mit einer Datenübertragungseinrichtung, wobei die Datenübertragungseinrichtung mindestens eine Antennenstruktur und mindestens ein elektronisches Bauelement umfasst.

Die Vorrichtung umfasst eine erste Aufbringeinrichtung zur Aufbringung einer Antennenstruktur, eine Durchleuchtungseinrichtung und mindestens eine Auswerteeinrichtung. Mittels der ersten Aufbringeinrichtung ist eine Antennenstruktur auf einen Trägerkörper aufbringbar wobei mittels der Durchleuchtungseinrichtung ein Durchleuchtungsbild von zumindest einem Abschnitt der Antennenstruktur erzeugbar ist. Mittels der Auswerteeinrichtung ist zumindest ein Bildbereich, in dem der zumindest eine Abschnitt der Antennenstruktur oder ein Teil des Abschnittes abgebildet ist, bestimmbar, wobei Rissstrukturen in dem Bildbereich detektierbar und mindestens ein Rissparameter bestimmbar ist, falls mindestens eine Rissstruktur detektiert wird. Weiter ist ein rissparameterabhängiges Qualitätskriterium auswertbar.

Weiter kann die Vorrichtung eine Bestückungseinrichtung zur Aufbringung eines elektronischen Bauelements und/oder eine weitere Aufbringeinrichtung zur Aufbringung einer laminierfähigen Lage und/oder eine Laminiereinrichtung umfassen. Mittels der Bestückungseinrichtung ist ein elektronisches Bauelement auf den Trägerkörper aufbringbar ist, wobei das elektronische Bauelement in einem Montagebereich über oder unter einem Abschnitt der Antennenstruktur anordenbar sein kann. Mittels der weiteren Aufbringeinrichtung ist mindestens eine weitere laminierfähige Lage auf den Trägerkörper aufbringbar. Mittels der Laminiereinrichtung ist der entstehende Lagenverbund zu einem Laminat laminierbar. Auch kann die Vorrichtung eine Aufbringeinrichtung für Klebstoff zur Befestigung des elektronischen Bauelements umfassen.

Die Vorrichtung kann auch ein Positioniermittel zur Positionierung der Durchleuchtungseinrichtung oder des Trägerkörpers umfassen. Hierdurch kann eine relative Position und/oder Orientierung der Durchleuchtungseinrichtung zur Antennenstruktur eingestellt werden. Auch ist es möglich, dass sequenziell mehrere Dokumente, also Trägerkörper mit einer Antennenstruktur, derart relativ zur Durchleuchtungseinrichtung positioniert werden, dass jeweils Durchleuchtungsbilder dieser Dokumente erzeugt werden können.

Die Detektion von Rissstrukturen ist insbesondere nach der Bestückung mit einem elektronischen Bauelement oder nach einer Lamination sinnvoll, da bei diesen Schritten mechanischer Druck auf die Antennenstruktur aufgebracht wird.

Weiter kann mindestens ein Parameter einer Intensitätswertverteilung in dem zumindest einen Bildbereich, in dem der zumindest eine Abschnitt der Antennenstruktur oder ein Teil des Abschnitts abgebildet ist, bestimmt und ein parameterabhängiges Qualitätskriteriums ausgewertet werden. Der Parameter kann ein Mittelwert oder eine Standardabweichung der Intensitätswertverteilung sein. Diese/r Parameter stellt/stellen eine Qualitätskenngröße für die Antennenstruktur, insbesondere für eine Gleichmäßigkeit einer Schichtdicke der Antennenstruktur dar. Somit ergibt sich in vorteilhafter Weise, dass eine umfassendere Qualitätskontrolle der Antennenstruktur durchgeführt werden kann.

Weiter kann ein Durchleuchtungsbild von einem Bereich der Datenübertragungseinrichtung, in dem zumindest ein Abschnitt der Antennenstruktur und das elektronische Bauelement zumindest teilweise angeordnet sind, erzeugt werden. Weiter kann ein Bildbereich bestimmt werden, in dem der zumindest eine Abschnitt der Antennenstruktur oder ein Teil des Abschnitts abgebildet ist. Weiter kann
ein Bildbereich bestimmt werden, in dem das elektronische Bauelement oder ein Teil des elektronischen Bauelements abgebildet ist. Weiter kann bildbasiert eine relative Lage und/oder Orientierung der Antennenstruktur zum elektronischen Bauelement, bestimmt und ein lage- und/oder orientierungsabhängiges Qualitätskriterium ausgewertet werden.

Hierdurch wird in vorteilhafter Weise eine bildbasierte Bestimmung einer relativen Lage des elektronischen Bauelements zu einer Antennenstruktur sowie die Auswertung eines davon abhängigen Qualitätskriteriums ermöglicht. Somit kann bildbasiert detektiert werden, ob das elektronische Bauelement mit einer gewünschten relativen Lage und/oder relativen Orientierung zu der Antennenstruktur auf den Trägerkörper aufgebracht wurde.

Dies verbessert wiederum eine Qualitätskontrolle und reduziert den Ausschuss, insbesondere in nachfolgenden Prozessschritten.

Die Erfindung wird anhand eines Ausführungsbeispiels näher erläutert. Die Figuren zeigen:
- Fig. 1: einen Trägerkörper mit einer Antennenstruktur in einer schematischen Draufsicht,
- Fig. 2: Verfahrensschritte zur Herstellung des Trägerkörpers mit der Antennenstruktur in einem schematischen Querschnitt, (a) Bereitstellen des Trägerkörpers; (b) Aufdrucken eines spiralförmigen Antennen-Leiterzuges einschließlich der Anschlusskontakte des Antennen-Leiterzuges auf den Trägerkörper; (c) Platzieren eines Chips über dem Antennen-Leiterzug,
- Fig. 3: einen Trägerkörper mit einer weiteren Antennenstruktur in einer schematischen Draufsicht,
- Fig. 4: ein schematisches Durchleuchtungsbild,
- Fig. 5: einen Teil eines binarisierten Durchleuchtungsbildes,
- Fig. 6: ein weiteres schematisches Durchleuchtungsbild und
- Fig. 7: ein schematisches Blockschaltbild einer erfindungsgemäßen Vorrichtung.

Nachfolgend bezeichnen gleiche Bezugszeichen Elemente mit gleichen oder ähnlichen technischen Merkmale.

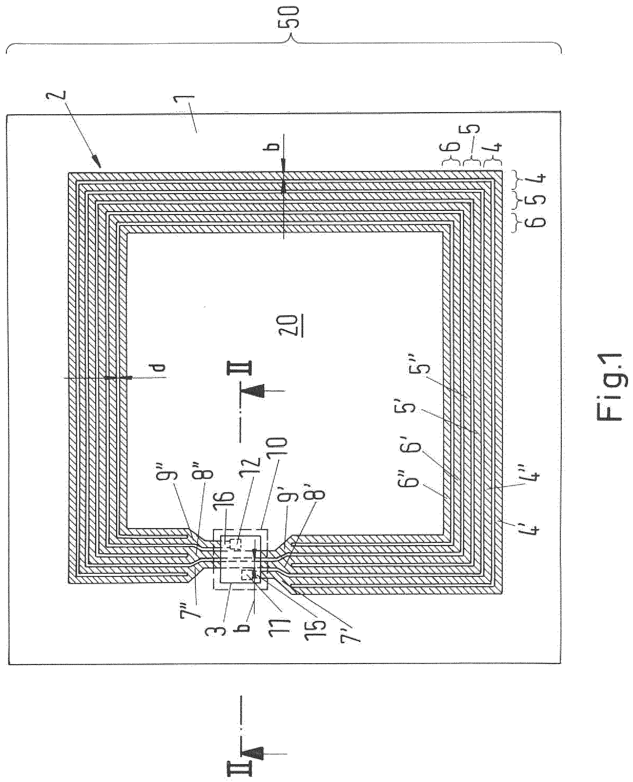

Die erfindungsgemäße kontaktlose Datenübertragungseinrichtung 50 gemäß Fig. 1 besteht aus einem Trägerkörper 1, auf dem eine Antennenstruktur 2 und ein elektronisches Bauelement 3, beispielsweise ein ungehäuster Chip, angeordnet sind. Der Chip 3 ist in einem Montagebereich 10 auf dem Trägerkörper 1 befestigt. Die als Antennen-Leiterzug ausgebildete Antennenstruktur 2 bildet ein Schaltkreiselement.

Der Trägerkörper 1 ist beispielsweise durch eine transparente (ungefüllte) Polycarbonatfolie mit einer Dicke von 80 µm, bevorzugt 100 µm gebildet. Auf der Polycarbonatfolie befindet sich der durchgehende spiralförmige Antennen-Leiterzug mit zueinander parallelen Spiralwindungen 4, 5, 6. Jede der Spiralwindungen 4, 5, 6 bildet jeweils vier sich senkrecht zueinander erstreckende Windungsabschnitte, die eine Antenneninnenfläche 20 umschließen. Jede dieser Spiralwindungen 4, 5, 6 ist in jeweils zwei Spiralwindungsäste 4', 4" bzw. 5', 5" bzw. 6', 6" aufgespalten, sodass die Spiralwindungen 4, 5, 6 in diesen Bereichen zweispurig verlaufen. Eine erste Spiralwindung 4 spaltet sich an den Verzweigungsstellen 7', 7" in die Spiralwindungsäste 4', 4", eine zweite Spiralwindung 5 an den Verzweigungsstellen 8', 8" in die Spiralwindungsäste 5', 5" und eine dritte Spiralwindung 6 an den Verzweigungsstellen 9', 9" in die Spiralwindungsäste 6', 6" auf. Im Montagebereich 10 des Chips 3 verlaufen die Spiralwindungen 4, 5, 6 einspurig. Die Spiralwindungen 4, 5, 6 verlaufen außerhalb des Montagebereiches 10 in einem geringen Abstand d parallel zueinander. Dieser Abstand d kann beispielsweise 200 µm betragen. Innerhalb des Montagebereiches 10, d.h. unter dem Chip 3, kann der Abstand zwischen den einspurigen Abschnitten der Spiralwindungen 4, 5, 6 noch geringer sein, weil die Spiralwindungen hier zwischen den Kontaktstellen 11, 12 des Chips 3 hindurchgeführt werden müssen. Es ist selbstverständlich vorstellbar, dass die Spiralwindungen 4, 5, 6 auch vollständig einspurig ausgebildet sind.

Zur elektrischen Kontaktierung des Chips 3 ist dieser in Flip-Chip-Technik auf dem Trägerkörper 1 montiert. Hierzu sind dessen Kontaktstellen 11, 12 in Form von Kontakthöckern kongruent zu den Kontaktanschlüssen 15, 16 des Antennen-Leiterzuges ausgebildet, d.h. in einem Abstand, der dem Abstand der Kontaktstellen 11, 12 des Chips 3 entspricht. Der Chip 3 kann beispielsweise mittels eines anisotropen Klebers auf den Trägerkörper 1 aufgeklebt sein, um diesen dort mechanisch zu verankern und einen elektrischen Kontakt zwischen den Kontakthöckern 11, 12 und den Kontaktanschlüssen 15, 16 herzustellen.

Der Antennen-Leiterzug geht von einem ersten Kontaktanschluss 15 aus, der mit einem ersten Kontakthöcker 11 des Chips 3 in elektrischem Kontakt steht. Von dort aus erstreckt sich die erste Spiralwindung 4 entgegen dem Uhrzeigersinn über eine erste Verzweigungsstelle 7', an der sich aus der einspurigen ersten Spiralwindung 4 zwei erste Spiralwindungsäste 4', 4", die parallel zueinander verlaufen, bilden. Nach einem Umlauf (360°) vereinigen sich diese beiden ersten Spiralwindungsäste 4', 4" an einer zweiten Verzweigungsstelle 7" wieder miteinander, sodass die erste Spiralwindung 4 wieder einspurig wird. Der Antennen-Leiterzug 2 durchquert dann den Montagebereich 10 des Chips 3 und verläuft hierzu unter dem Chip 3. Nach dem Verlassen des Montagebereichs 10 verzweigt sich die nunmehr zweite Spiralwindung 5 an der ersten Verzweigungsstelle 8' unter Bildung einer zweispurigen zweiten Spiralwindung, die durch die beiden zweiten Spiralwindungsäste 5', 5" gebildet ist. Diese Äste 5', 5" verlaufen wiederum parallel zueinander und im Gegenuhrzeigersinn parallel zu den ersten Spiralwindungsästen 4', 4" und zwar innerhalb der von diesen gebildeten Antennenfläche 20. Nach einem vollständigen Umlauf der zweiten Spiralwindungsäste 5', 5" vereinigen sich diese an der zweiten Verzweigungsstelle 8" wieder unter Bildung der einspurigen zweiten Spiralwindung 5. Nach dem Durchqueren des Montagebereichs 10 unter dem Chip 3 geht die zweite Spiralwindung 5 in die dritte Spiralwindung 6 über, die sich an der ersten Verzweigungsstelle 9' in zwei dritte Spiralwindungsäste 6', 6" aufspaltet, wobei eine zweispurige dritte Spiralwindung gebildet wird. Nach einem erneuten vollständigen Umlauf innerhalb der durch die ersten Spiralwindungsäste 4', 4" und die zweiten Spiralwindungsäste 5', 5" gebildeten Antennenfläche 20 erreicht die dritte zweispurige Spiralwindung 6 die zweite Verzweigungsstelle 9", wo sich die beiden Äste 6', 6" wieder miteinander vereinigen und die einspurige dritte Spiralwindung 6 bilden. Diese endet im Montagebereich 10 unter dem Chip 3 in einem zweiten Anschlusskontakt 16, der mit einer durch einen Kontakthöcker gebildeten Kontaktstelle 12 des Chips elektrisch kontaktiert ist.

Die Breite b der Spiralwindungsäste 4', 4", 5', 5", 6', 6" ist über deren gesamten Verlauf gleich bleibend und genauso groß wie die Breite der einspurigen Abschnitte der Spiralwindungen 4, 5, 6 im Montagebereich 10 unter dem Chip 3 ausgebildet. Diese Breite b beträgt beispielsweise 250 µm.

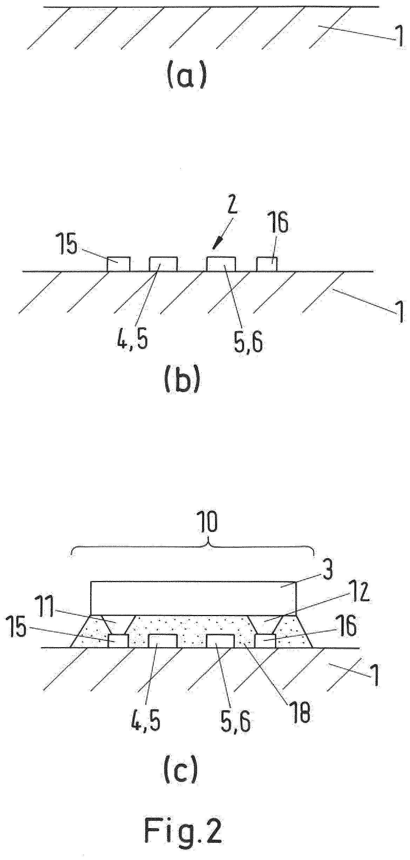

In Fig. 2 ist das Verfahren zur Herstellung der erfindungsgemäßen Datenübertragungseinrichtung 50 von Fig. 1 in einer schematischen Darstellung in Schnitten gemäß II - II (siehe Fig. 1) wiedergegeben.

In einem ersten Verfahrensschritt wird zunächst der Trägerkörper 1 bereitgestellt (Fig. 2a). In einem zweiten Verfahrensschritt wird der Antennen-Leiterzug, bestehend aus den Spiralwindungen 4, 5, 6 und den Anschlusskontakten 15, 16 auf dem Trägerkörper 1 erzeugt, beispielsweise durch Aufdrucken der Antennenstruktur mit einer Silber-Leitpaste mittels Siebdruck (Fig. 2b).

In einem dritten Verfahrensschritt wird Chip 3 montiert (Fig. 2c). Der Chip 3 weist an seinen Kontaktstellen 11, 12 Kontakthöcker, beispielsweise aus Kupfer/Nickel/Gold, auf, die mit den Anschlusskontakten 15, 16 des Antennen-Leiterzuges 2, in elektrischen Kontakt gebracht sind. Hierzu ist der Chip 3 mit den Kontakthöckern 11, 12 auf die Anschlusskontakte 15, 16 aufgesetzt. Für die Chipmontage wird im Montagebereich 10 zunächst ein anisotroper Leitkleber 18 in dosierter Menge beispielsweise mit einem Dispenser auf den Trägerkörper 1 und den Antennen-Leiterzug 2 aufgebracht. Dieser Leitkleber 18 enthält sehr kleine leitfähige Metallpartikel, die einen elektrischen Kontakt zwischen den Kontakthöckern 11, 12 des Chips und den Anschlusskontakten 15, 16 herstellen. Außerdem fixiert der Leitkleber 18 den Chip 3 mechanisch auf dem Trägerkörper 1.

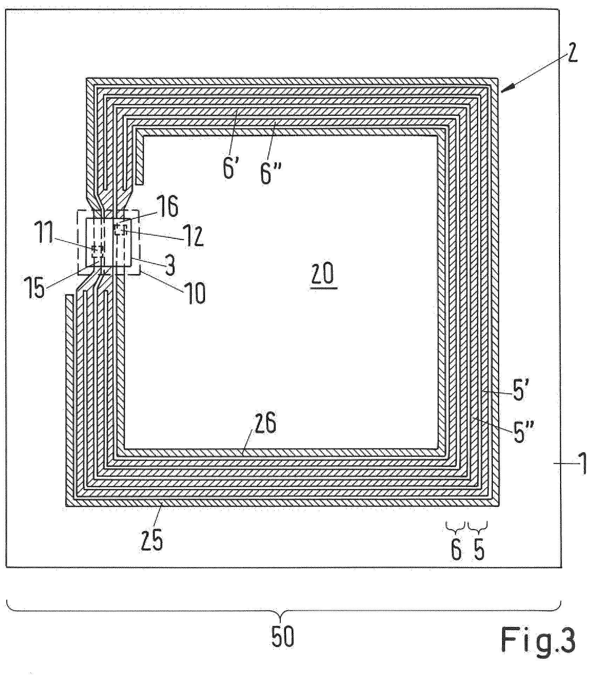

In Fig. 3 ist eine zweite Ausführungsform der erfindungsgemäßen Datenübertragungseinrichtung 50 dargestellt. Diese unterscheidet sich von der in Fig. 1 dargestellten ersten Ausführungsform dadurch, dass der Antennen-Leiterzug zum einen zwei Spiralwindungen 5, 6 anstelle von drei Spiralwindungen aufweist und dass zum anderen zusätzlich zwei Blind-Leiterzüge 25, 26 vorgesehen sind. Der Antennen-Leiterzug und die Blind-Leiterzüge 25, 26 bilden zusammen das Schaltkreiselement der kontaktlosen Datenübertragungseinrichtung 50.

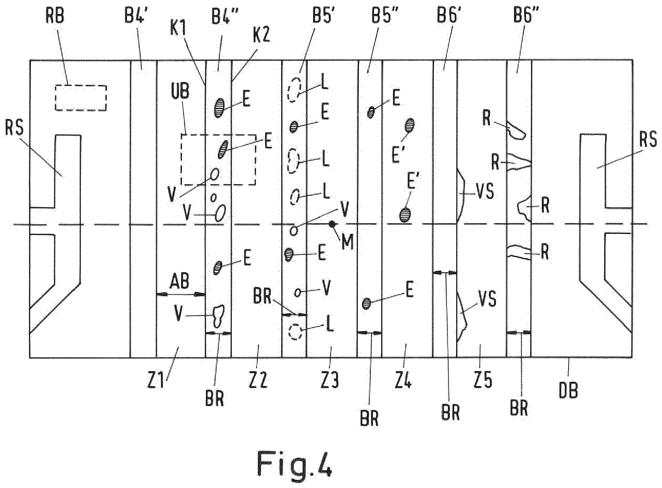

In Fig. 4 ist ein Durchleuchtungsbild DB des in Fig. 1 dargestellten Bereiches B des Trägerkörpers 1 dargestellt. Dargestellt sind die Bildbereiche B4', B4", B5', B5", B6', B6", in die die Spiralwindungsäste 4', 4", 5', 5", 6', 6" (siehe Fig. 1) abgebildet sind. In dem Durchleuchtungsbild DB sind hierbei von einem unteren Bildrand hin zu einem oberen Bildrand hin parallel verlaufende Spiralwindungsäste 4', 4", 5', 5", 6', 6" abgebildet. Weiter dargestellt sind Bildbereiche RS, in die Referenzstrukturen, die in Fig. 1 nicht dargestellt sind, abgebildet sind. Die Referenzstrukturen RS können beispielsweise durch Testleiterbahnen oder so genannten Stützleiterbahnen gebildet werden.

Dargestellt sind weiterhin abgebildete Erhebungen E einer Oberfläche der Spiralwindungsäste 4', ... 6", wobei sich die Oberfläche der Spiralwindungsäste 4', ... 6" in diesen Bereichen über eine gewünschte Referenzhöhe erhebt. Weiter dargestellt sind abgebildete Vertiefungen V in den Oberflächen der Spiralwindungsäste 4', ... 6". In diesen Bereichen liegt eine Oberfläche der Spiralwindungsäste 4', ... 6" unterhalb der gewünschten Referenzhöhe. Mit Strichlinien dargestellt sind abgebildete Lufteinschlüsse L in den die Spiralwindungsäste 4', ... 6" bildenden Leiterbahnen.

Weiter dargestellt sind abgebildete Rissstrukturen R in einem sechsten Spiralwindungsast 6". Diese Rissstrukturen R können sich hierbei über eine gesamte abgebildete Breite BR, die zur tatsächlichen Breite b korrespondiert, der abgebildeten Spiralwindungsäste 4', ... 6" oder nur über einen Teil davon erstrecken.

Hierbei ist dargestellt, dass ein erster Spiralwindungsast 4' fehlerfrei ist. Insbesondere weist dieser Spiralwindungsast 4' keine Erhebung E, keine Vertiefung V, keine Lufteinschlüsse L und keine Risse R auf. Auch weist der erste Spiralwindungsast 4' keine Verschmierungen VS auf wie beispielsweise ein fünfter Spiralwindungsast 6'.
Dargestellt sind weiter Bildbereiche Z1, Z2, Z3, Z4, Z5, in die Zwischenräume abgebildet sind, die zwischen den jeweils benachbarten Spiralwindungsästen 4', ... 6' angeordnet sind. Exemplarisch ist ein abgebildeter Abstand AB zwischen dem ersten Spiralwindungsast 4' und einem zweiten Spiralwindungsast 4" dargestellt. Dieser Abstand AB entspricht einer Breite eines Zwischenraumes Z1 zwischen dem ersten und dem zweiten Spiralwindungsast 4', 4" und korrespondiert mit dem tatsächlichen Abstand d.

Mittels Methoden der Bildverarbeitung können hierbei die Bildbereiche B4', ... B6" bestimmt werden, in denen die einzelnen Spiralwindungsäste 4', ... 6" abgebildet sind. Das Bestimmen dieser Bildbereiche B4', ... B6" kann beispielsweise über eine kantenbasierte Segmentierung erfolgen. Dargestellt ist hierbei ein Untersuchungsbereich UB zur Kantendetektion.

Nachfolgend wird davon ausgegangen, dass ein Bildursprungspunkt in einer linken oberen Ecke des Durchleuchtungsbildes DB liegt. Zeilen des Durchleuchtungsbildes DB sind in aufsteigender Zeilenzahl ausgehend von dem Bildursprungspunkt untereinander, also in vertikaler Richtung, angeordnet. Bildspalten des Durchleuchtungsbildes DB sind in aufsteigender Spaltenzahl ausgehend vom Bildursprungspunkt in horizontaler Richtung nebeneinander angeordnet. Eine Breite wird nachfolgend als Breite in horizontaler Richtung, also in Spaltenrichtung, verstanden.

Eine Breite des Untersuchungsbereiches UB ist hierbei größer als eine Breite BR eines Bildbereiches B4', ... B6", jedoch kleiner als die Summe der Breite BR und des Abstandes AB zwischen zwei benachbarten Bildbereichen B4', ... B6". In Fig. 4 ist dargestellt, dass der Untersuchungsbereich UB einen Bildbereich B4" des Durchleuchtungsbildes DB umfasst, in den der zweite Spiralwindungsast 4" abgebildet ist.

In diesem Untersuchungsbereich UB wird nun zeilenweise ein Intensitätswertverlauf von Pixeln des Untersuchungsbereiches UB bestimmt. An einer in horizontaler Richtung ersten, also linken Kante K1 verringert sich der Intensitätswert und der Intensitätswertverlauf weist somit eine negative Steigung auf. An einer in horizontaler Richtung zweiten, also rechten, Kante K2 des zweiten Spiralwindungsastes 4" steigen Intensitätswerte an, wobei der Intensitätswertverlauf eine positive Steigung aufweist. In Abhängigkeit eines Intensitätsschwellwertes und an Maxima der ersten Ableitung des Intensitätswertverlaufs können im Untersuchungsbereich UB für jede Zeile Kantenpixel der ersten Kante K1 und der zweiten Kante K2 bestimmt werden. Ein Bildbereich zwischen der ersten Kante K1 und der zweiten Kante K2 wird nachfolgend als ein Teil des Bildbereichs B4" bestimmt, in den die Antennenstruktur 2, in diesem Fall insbesondere der zweite Spiralwindungsast 4", abgebildet ist. Der Untersuchungsbereich UB kann nachfolgend sowohl in horizontaler als auch in vertikaler Richtung verschoben werden, um Kantenpixel aller Kanten aller Bildbereiche B4', ... B6" zu detektieren. Gleichzeitig können Bildbereiche Z1,...Z5, die zwischen Kanten K1, K2 dieser Bildbereiche B4', ... B6" angeordnet sind, bestimmt werden. Selbstverständlich kann auch das Durchleuchtungsbild DB oder ein Untersuchungsbereich UB spaltenweise in ansteigender Zeilenzahl durchlaufen werden, um Kanten zu detektieren.

Weiter dargestellt ist ein Referenzbereich RB des Durchleuchtungsbildes DB, welcher zur Bestimmung eines Referenzintensitätswertes dient. Dieser Referenzbereich RB ist in einem Bereich des Durchleuchtungsbildes DB angeordnet, in dem keine Antennenstruktur 2 abgebildet ist. Somit repräsentieren Intensitätswerte von Pixeln des Referenzbereiches RB eine Absorption von Röntgenstrahlung durch den Trägerkörper 1 (siehe Fig. 1). Als Referenzintensitätswert wird ein Mittelwert der Intensitätswertverteilung der Intensitätswerte der Pixel im Referenzbereich RB bestimmt.

Nachfolgend wird eine Differenz zwischen den Mittelwerten der Intensitätswertverteilung der Pixel in den Bildbereichen B4', ... B6" und dem Referenzintensitätswert bestimmt. Diese Differenz entspricht dann einer mittleren Schichtdicke des jeweils abgebildeten Spiralwindungsasts 4', ...6", die wiederum von den in Fig. 4 dargestellten Erhebungen E, Vertiefungen V und Lufteinschlüssen L abhängt.

Liegt eine dieser Differenzen außerhalb eines vorbestimmten Referenzbereiches und/oder ist eine Standardabweichung größer als eine vorbestimmte Referenzabweichung, so kann eine ungenügende Qualität der aufgebrachten Antennenstruktur 2, insbesondere der Spiralwindungsäste 4', ... 6", detektiert werden. Hierbei ist zu beachten, dass sich Lufteinschlüsse L sowohl auf den Mittelwert als auch auf die Standardabweichung auswirken können. Hierbei ist jedoch ein Einfluss auf den Mittelwert geringer als ein Einfluss auf die Standardabweichung.

Vor der Bestimmung des Bildbereiches B4', ... B6" können die Bildbereiche RS, in die die Referenzstrukturen abgebildet sind, z.B. modellbasiert, bestimmt werden. Hierdurch kann ein Referenzmittelpunkt M bestimmt werden, der auf einer horizontalen Mittellinie der Referenzstrukturen RS angeordnet ist. Hierdurch kann eine Ausrichtung des Durchleuchtungsbildes DB erfolgen. Insbesondere kann in Abhängigkeit des Mittelpunktes M eine Lage des Referenzbereiches RB und eine Lage des Untersuchungsbereiches UB bestimmt werden. Hierbei wird angenommen, dass vorbekannt ist, dass z.B. in einem Bildbereich über dem linken Bildbereich RS keine Spiralwindungsast 4', ... 6" abgebildet ist.

Weiter können pixelbasierte Breiten BR der Bildbereiche B4', ... B6" bestimmt werden. Auch können Abstände AB zwischen den einzelnen benachbarten Bildbereichen B4', ... B6" bestimmt werden. Ein Qualitätskriterium kann beispielsweise dann nicht erfüllt sein, wenn diese Breiten BR außerhalb eines vorbestimmten Bereiches liegen und/oder die Abstände AB außerhalb eines vorbestimmten Bereiches liegen.

Auch ist es möglich, für die Bildbereiche Z1,...Z5 einen Mittelwert und/oder eine Standardabweichung einer Intensitätswertverteilung von Pixeln dieses Bildbereiches Z1, ... Z5zu bestimmen. Dies kann entsprechend den vorher angeführten Ausführungen zur Differenzbildung ebenfalls in Abhängigkeit des Referenzintensitätswertes erfolgen. Dies erlaubt eine Qualitätskontrolle von Zwischenräumen zwischen den Spiralwindungsästen 4', ... 6". In Fig. 4 ist dargestellt, dass ein vierter Zwischenraum abgebildete Erhebungen E' über einer Oberfläche des Trägerkörpers 1 aufweist. Hierdurch wird ein Mittelwert der Intensitätswertverteilung von Pixeln des Bildbereiches Z4, in dem der vierte Zwischenraum abgebildet ist, kleiner als ein Mittelwert der Intensitätswertverteilung von Pixeln z.B. eines Bildbereiches Z3, in dem ein dritter Zwischenraum abgebildet ist, sein.

Durch die Auswertung von den angeführten Parametern von Intensitätswertverteilungen in verschiedenen Bildbereichen können in vorteilhafter Weise Rückschlüsse auf eine Gleichmäßigkeit, eine Schichtdicke sowie auf eine Breite der Spiralwindungsäste 4', ... 6" gezogen werden. Auch die in Fig. 4 dargestellten abgebildeten Verschmierungen VS, die sich in einen fünften Zwischenraum zwischen dem fünften Spiralwindungsast 6' und dem sechsten Spiralwindungsast 6" erstrecken, beeinflussen einen Mittelwert und eine Standardabweichung einer Intensitätswertverteilung eines Bildbereiches Z5, in dem dieser fünfte Zwischenraum abgebildet ist. Wie auch die Erhebungen E, die Vertiefungen V und die Lufteinschlüssen L beeinflussen Rissstrukturen R im sechsten Spiralwindungsast 6" einen Mittelwert und eine Standardabweichung einer Intensitätswertverteilung eines Bildbereiches B6", in dem der sechste Spiralwindungsast 6" abgebildet ist.

Somit kann durch das vorgeschlagene Verfahren eine Qualität der Antennenstruktur 2, insbesondere eine Qualität der Schichtdicke der Spiralwindungsäste 4', ... 6", bestimmt werden. Auch können Verschmierungen oder fehlerhafte Stellen in Zwischenräumen bestimmt werden.

Ebenfalls kann ein resultierender Mittelwert der Mittelwerte aller Bildbereiche B4', ... B6", in die die Spiralwindungsäste 4', ... 6" abgebildet sind, bestimmt werden. Dieser resultierende Mittelwert liefert eine Information über eine Gleichmäßigkeit einer Schichtdicke der insgesamt abgebildeten Antennenstruktur 2 über einer Oberfläche des Trägerkörpers 1. Ebenfalls kann ein resultierender Mittelwert der Standardabweichungen bestimmt werden.

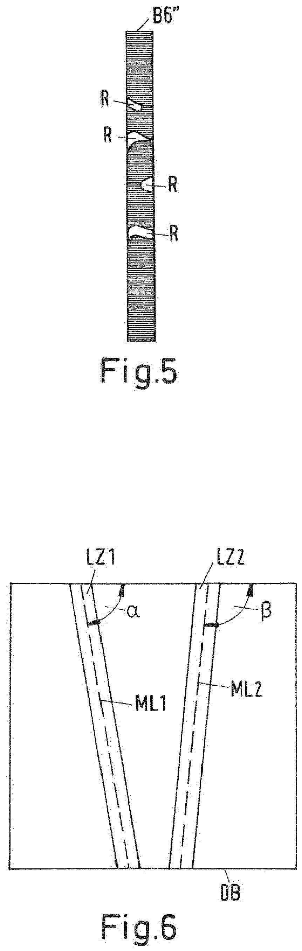

In Fig. 5 ist eine binarisierte Abbildung des sechsten Spiralwindungsastes 6" (siehe Fig. 4) dargestellt. Hierbei ist dargestellt, dass die Rissstrukturen R Pixel umfassen, deren Intensitätswerte auf den Wert "1" gesetzt wurden und somit in der Abbildung als helle Bereiche erscheinen. Den verbleibenden Pixeln wurde der Intensitätswert "0" zugewiesen, sodass diese in der Abbildung dunkel erscheinen. Hierbei wurde die Binarisierung mit einem Schwellwert durchgeführt, der z.B. 50 % eines Mittelwerts der Intensitätswerte aller Pixel des Bildbereiches B6", in dem der sechste Spiralwindungsast 6" abgebildet ist, beträgt. Hierbei ist erkennbar, dass die in Fig. 5 dargestellte binarisierte Abbildung eine einfachere Detektion der Rissstrukturen R erlaubt, z.B. mittels des vorhergehend erläuterten kantenbasierten Segmentierungsverfahren.

In Fig. 6 ist ein schematisches Durchleuchtungsbild DB mit einem Bildbereich LZ1, in dem ein ersten Leiterzug abgebildet ist, und einem Bildbereich LZ2, in dem ein zweiter Leiterzug abgebildet ist, dargestellt. Weiter dargestellt ist eine Mittellinie ML1 des ersten Bildbereiches LZ1 und eine Mittellinie ML2 des zweiten Bildbereiches LZ2. Dargestellt ist weiter ein erster Winkel α, unter dem die erste Mittellinie ML1 den oberen Bildrand des Durchleuchtungsbildes DB schneidet. Weiter dargestellt ist zweiter Winkel β, unter dem die zweite Mittellinie ML2 den oberen Bildrand schneidet. Hierbei ist dargestellt, dass eine Differenz zwischen dem ersten Winkel α und dem zweiten Winkel β größer als Null ist. Somit verlaufen die Bildbereiche LZ1, LZ2 und somit auch die Leiterzüge nicht parallel. Ist jedoch ein paralleler Verlauf der Leiterzüge gewünscht, so kann in Abhängigkeit der Höhe der Differenz zwischen dem ersten Winkel α und dem zweiten Winkel β ein Qualitätskriterium als nicht erfüllt gewertet werden.

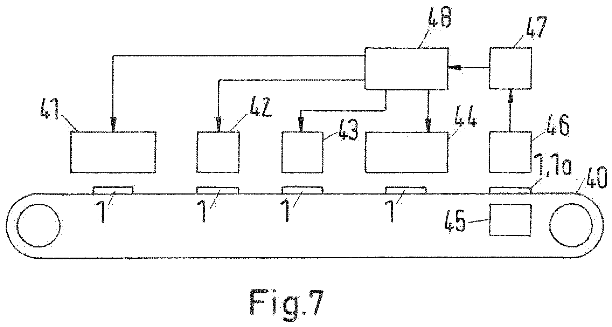

In Fig. 7 ist eine Vorrichtung zur Herstellung eines Wert- und/oder Sicherheitsdokuments dargestellt. Die Vorrichtung umfasst eine Siebdruckeinrichtung 41, eine Bestückungseinrichtung 42, eine Aufbringeinrichtung 43 für eine laminierfähige Kunststofflage, eine Laminiereinrichtung 44 und eine Röntgeneinrichtung, die eine Strahlenquelle 45 und einen Detektor 46 umfasst. Weiter umfasst die Vorrichtung eine Auswerteeinrichtung 47 und eine Steuereinrichtung 48. Dargestellt sind verschiedene Trägerkörper 1, die auf einem Transportband 40 der Vorrichtung transportiert werden. Dargestellt ist hierbei ein erster Trägerkörper 1a, auf den bereits eine Antennenstruktur 2, ein elektronisches Bauelement 3 und eine weitere laminierfähige Kunststofflage aufgebracht wurde und der mittels der Laminiereinrichtung 44 laminiert wurde. Die Röntgeneinrichtung erzeugt hierbei ein Durchleuchtungsbild DB (siehe z.B. Fig. 4) des ersten Trägerkörpers 1a. Die Auswerteeinrichtung 47, die datentechnisch mit dem Detektor 46 verbunden ist, führt die vorhergehend erläuterte bildbasierte Detektion einer Rissstruktur R (siehe z.B. Fig. 4) und Bestimmung einer Orientierung der auf den ersten Trägerkörper 1a aufgebrachten Antennenstruktur 2 (siehe Fig. 1) durch. In Abhängigkeit der bestimmten Rissparameter und der bestimmten Orientierung, die die Auswerteeinrichtung 47 an die Steuereinrichtung 48 datentechnisch überträgt, steuert die Steuereinrichtung 48 das von der Siebdruckeinrichtung 41 durchgeführte Siebdruckverfahren, den von der Bestückungseinrichtung 42 durchgeführten Bestückungsprozess, den von der Aufbringeinrichtung 43 durchgeführten Aufbringprozess der weiteren laminierfähigen Lage und die von der Laminiereinrichtung 44 durchgeführte Lamination. Hierbei kann die Steuereinrichtung 48 insbesondere die vorhergehend erläuterten Aufbringparameter und/oder den Laminierparameter derart einstellen, dass eine Abweichung eines bestimmten Rissparameters von einem gewünschten Rissparameter und einer bestimmten Orientierung von einer gewünschten Orientierung reduziert oder minimiert wird.

Selbstverständlich ist es auch vorstellbar, dass zwar eine datentechnische Verbindung zwischen der Auswerteeinrichtung 47 und der Steuereinrichtung 48 besteht, jedoch die Trägerkörper 1, 1a nicht auf einem gemeinsamen Transportband 40 durch die Siebdruckeinrichtung 41, die Aufbringvorrichtung 42, die Bestückungseinrichtung 43, die Laminiereinrichtung 44 und die Röntgeneinrichtung transportiert werden. Z.B können die Siebdruckeinrichtung 41 , die Aufbringvorrichtung 42, die Bestückungseinrichtung 43, die Laminiereinrichtung 44 und die Röntgeneinrichtung zumindest teilweise in voneinander entkoppelten und somit nicht durch ein einziges Transportband 40 verbundenen Abschnitten einer Fertigungsstraße angeordnet sein.

## Patentansprüche

1. Verfahren zur Herstellung eines Wert- und/oder Sicherheitsdokuments mit einer Antennenstruktur (2), umfassend folgende Verfahrensschritte:
- Bereitstellen eines Trägerkörpers (1, 1a),
- Aufbringen einer Antennenstruktur (2) auf den Trägerkörper (1, 1a),
- Erzeugen eines Durchleuchtungsbildes (DB) zumindest eines Abschnitts der Antennenstruktur (2), **gekennzeichnet durch** folgende weitere Verfahrensschritte:
- Bestimmen zumindest eines Bildbereichs, in dem der zumindest eine Abschnitt der Antennenstruktur (2) oder ein Teil des Abschnitts der Antennenstruktur (2) abgebildet ist,
- Detektion von Rissstrukturen (R) in dem Bildbereich,
- Bestimmen mindestens eines Rissparameters, falls mindestens eine Rissstruktur (R) detektiert wird,
- Auswertung eines rissparameterabhängigen Qualitätskriteriums.

2. Verfahren nach Anspruch 1, **dadurch gekennzeichnet, dass** eine Anzahl der Rissstrukturen (R) und/oder eine Rissbreite pro Rissstruktur (R) und/oder eine Risshöhe pro Rissstruktur (R) und/oder eine Rissfläche pro Rissstruktur (R) und/oder eine kumulierte Rissbreite und/oder eine kumulierte Risshöhe und/oder eine kumulierte Rissfläche bestimmt wird/werden.

3. Verfahren nach einem der Ansprüche 1 oder 2, **dadurch gekennzeichnet, dass** die mindestens eine Rissstruktur (R) mittels einer Binarisierung detektiert wird.

4. Verfahren nach einem der Ansprüche 1 bis 3, **dadurch gekennzeichnet, dass** zur Detektion von Rissstrukturen (R) in dem Bildbereich, in dem zumindest ein Abschnitt der Antennenstruktur (2) oder ein Teil des Abschnitts abgebildet ist, eine Kantendetektion durchgeführt wird.

5. Verfahren nach einem der Ansprüche 1 bis 4, **dadurch gekennzeichnet, dass** ein Durchleuchtungsbild (DB) von mindestens einem Bereich des Trägerkörpers (1) erzeugt wird, in dem ein Sicherheitsmerkmal und/oder -element des Wert- und/oder Sicherheitsdokuments unter oder über der Antennenstruktur (2) angeordnet ist und/oder von mindestens einem Bereich des Trägerkörpers (1) erzeugt wird, in dem zumindest ein Abschnitt der Antennenstruktur (2) und das elektronische Bauelement (3) angeordnet sind.

6. Verfahren nach einem der Ansprüche 1 bis 5, **dadurch gekennzeichnet, dass** eine bildbasierte Orientierung der Antennenstruktur (2) oder von Teilen der Antennenstruktur (2) bestimmt wird, wobei zusätzlich ein orientierungsabhängiges Qualitätskriterium ausgewertet wird.

7. Verfahren nach Anspruch 6, **dadurch gekennzeichnet, dass** die Antennenstruktur (2) einen ersten Abschnitt und mindestens einen weiteren Abschnitt umfasst, wobei ein erster Bildbereich bestimmt wird, in dem der erste Abschnitt oder ein Teil des ersten Abschnitts abgebildet ist, wobei eine bildbasierte Orientierung des ersten Abschnitts bestimmt wird, wobei ein weiterer Bildbereich bestimmt wird, in dem der weitere Abschnitt oder ein Teil des weiteren Abschnitts abgebildet ist, wobei eine bildbasierte Orientierung des weiteren Abschnitts bestimmt wird.

8. Verfahren nach einem der Ansprüche 6 oder 7, **dadurch gekennzeichnet, dass** mindestens eine Orientierung der Antennenstruktur (2) für verschiedene Dokumente bestimmt wird.

9. Verfahren nach einem der Ansprüche 1 bis 8, **dadurch gekennzeichnet, dass** das Verfahren folgende Verfahrensschritte umfasst:
- Aufbringen einer ersten Antennenstruktur (2) auf den ersten Trägerkörper (1, 1a) in Abhängigkeit mindestens eines antennenspezifischen Aufbringparameters,
- Bereitstellen eines weiteren Trägerkörpers,
- Aufbringen einer weiteren Antennenstruktur auf den weiteren Trägerkörper in Abhängigkeit des mindestens einen antennenspezifischen Aufbringparameters, wobei der mindestens eine antennenspezifische Aufbringparameter in Abhängigkeit des mindestens einen Rissparameters bestimmt wird.

10. Vorrichtung zur Herstellung eines Wert- und/oder Sicherheitsdokuments mit einer Antennenstruktur (2), umfassend eine Aufbringeinrichtung, eine Durchleuchtungseinrichtung und mindestens eine Auswerteeinrichtung (47),
wobei mittels der Aufbringeinrichtung eine Antennenstruktur (2) auf einen Trägerkörper (1, 1a) aufbringbar ist, wobei mittels der Durchleuchtungseinrichtung ein Durchleuchtungsbild (DB) von zumindest einem Abschnitt der Antennenstruktur (2) erzeugbar ist, wobei mittels der Auswerteeinrichtung (47) zumindest ein Bildbereich, in dem der zumindest eine Abschnitt der Antennenstruktur (2) oder ein Teil des Abschnitts der Antennenstruktur (2) abgebildet ist, bestimmbar ist, wobei Rissstrukturen (R) in dem Bildbereich detektierbar und mindestens ein Rissparameter bestimmbar ist, falls mindestens eine Rissstruktur (R) detektiert wird, wobei ein rissparameterabhängiges Qualitätskriterium auswertbar ist.

## Claims

1. Method for producing a value and/or security document having an antenna structure (2), comprising the following method steps:
- providing a support element (1, 1a),
- placing an antenna structure (2) onto the support element (1, 1a),
- generating a fluoroscopic image (DB) at least of a portion of the antenna structure (2), **characterised by** the following further method steps:
- determining at least one image region, in which the at least one portion of the antenna structure (2) or part of the portion of the antenna structure (2) is imaged,
- detecting fissure structures (R) in the image region,
- determining at least one fissure parameter if at least one fissure structure (R) is detected,
- evaluating a quality criterion depending on the fissure parameter.

2. Method according to claim 1, **characterised in that** a number of fissure structures (R) and/or a fissure width per fissure structure (R) and/or a fissure height per fissure structure (R) and/or a fissure surface area per fissure structure (R) and/or a cumulative fissure width and/or a cumulative fissure height and/or a cumulative fissure surface area is/are determined.

3. Method according to any one of claims 1 or 2, **characterised in that** the at least one fissure structure (R) is detected by means of a binarisation.

4. Method according to any one of claims 1 to 3, **characterised in that**, for the detecting of fissure structures (R) in the image region in which at least one portion of the antenna structure (2) or part of the portion of the antenna structure is imaged, an edge detection is performed.

5. Method according to any one of claims 1 to 4, **characterised in that** a fluoroscopic image (DB) is produced of at least one portion of the support element (1), in which a security feature and/or security element of the value document and/or security document is arranged under or over the antenna structure (2), and/or of at least one portion of the support element (1), in which at least a portion of the antenna structure (2) and the electronic component (3) are arranged.

6. Method according to any one of claims 1 to 5, **characterised in that** an image-based orientation of the antenna structure (2) or of portions of the antenna structure (2) is determined, wherein, in addition, an orientation-dependent quality criterion is evaluated.

7. Method according to claim 6, **characterised in that** the antenna structure (2) comprises a first portion and at least one further portion, wherein a first image region is determined, in which the first portion or a part of the first portion is imaged, wherein an image-based orientation of the first portion is determined, wherein a further image region is determined, in which the further portion or a part of the further image region is imaged, wherein an image-based orientation of the further portion is determined.

8. Method according to any one of claims 6 or 7, **characterised in that** at least one orientation of the antenna structure (2) is determined for different documents.

9. Method according to any one of claims 1 to 8, **characterised in that** the method comprises the following method steps:
- placing of a first antenna structure (2) on the first support element (1, 1a) as a dependency of at least one antenna-specific placement parameter,
- providing a further support element,
- placing a further antenna structure onto the further support element as a dependency of the at least one antenna-specific placement parameter, wherein the at least one antenna-specific placement parameter is determined as a dependency of the at least one fissure parameter.

10. Device for producing a value document and/or a security document having an antenna structure (2) comprising a placement device, a fluoroscopic image device, and at least one evaluation device (47), wherein, by means of the placement device, an antenna structure (2) can be placed onto a support element (1, 1a), wherein, by means of the fluoroscopic imaging device, a fluoroscopic image (DB) of at least one portion of the antenna structure (2) can be produced, wherein, by means of the evaluation device (47), at least one image region can be determined, in which the at least one portion of the antenna structure (2) or a part of the portion of the antenna structure (2) is imaged, wherein fissure structures (R) in the image region can be detected and at least one fissure parameter can be determined, in the event that at least one fissure structure (R) is detected, and wherein a quality criterion dependent on the fissure parameter can be evaluated.

## Revendications

1. Procédé de fabrication d'un document de valeur et/ou de sécurité avec une structure d'antenne (2), comprenant des étapes de procédé suivantes :
- fourniture d'un corps de support (1, 1a),
- application d'une structure d'antenne (2) sur le corps de support (1, 1a),
- génération d'une image radioscopique (DB) d'au moins une section de la structure d'antenne (2), **caractérisé par** les étapes de procédé supplémentaires suivantes :
- définition d'au moins une zone d'image, dans laquelle l'au moins une section de la structure d'antenne (2) ou une partie de la section de la structure d'antenne (2) est reproduite,
- détection de structures de fissure (R) dans la zone d'image,
- définition d'au moins un paramètre de fissure si au moins une structure de fissure (R) est détectée,
- évaluation d'un critère de qualité dépendant du paramètre de fissure.

2. Procédé selon la revendication 1, **caractérisé en ce qu'**un nombre de structures de fissure (R) et/ou une largeur de fissure par structure de fissure (R) et/ou une hauteur de fissure par structure de fissure (R) et/ou une surface de fissure par structure de fissure (R) et/ou une largeur de fissure cumulée et/ou une hauteur de fissure cumulée et/ou une surface de fissure cumulée est déterminée/sont déterminées.

3. Procédé selon l'une quelconque des revendications 1 ou 2, **caractérisé en ce que** l'au moins une structure de fissure (R) est détectée au moyen d'une binarisation.

4. Procédé selon l'une quelconque des revendications 1 à 3, **caractérisé en ce qu'**une détection d'arête est effectuée aux fins de la détection de structures de fissure (R) dans la zone d'image, dans laquelle au moins une section de la structure d'antenne (2) ou une partie de la section est reproduite.

5. Procédé selon l'une quelconque des revendications 1 à 4, **caractérisé en ce qu'**une image radioscopique (DB) d'au moins une zone du corps de support (1) est générée, dans laquelle une caractéristique et/ou un élément de sécurité du document de valeur et/ou de sécurité sont disposés sous ou au-dessus de la structure d'antenne (2), et/ou une image radioscopique d'au moins une zone du corps de support (1) est générée, dans laquelle au moins une section de la structure d'antenne (2) et le composant (3) électronique sont disposés.

6. Procédé selon l'une quelconque des revendications 1 à 5, **caractérisé en ce qu'**une orientation basée sur l'image de la structure d'antenne (2) ou de parties de la structure d'antenne (2) est définie, dans lequel en supplément un critère de qualité dépendant de l'orientation est évalué.

7. Procédé selon la revendication 6, **caractérisé en ce que** la structure d'antenne (2) comprend une première section et au moins une autre section, dans lequel une première zone d'image est définie, dans laquelle la première section ou une partie de la première section est reproduite, dans lequel une orientation basée sur l'image de la première section est définie, dans lequel une autre zone d'image est définie, dans laquelle l'autre section ou une partie de l'autre section est reproduite, dans lequel une orientation basée sur l'image de l'autre section est définie.

8. Procédé selon l'une quelconque des revendications 6 ou 7, **caractérisé en ce qu'**au moins une orientation de la structure d'antenne (2) est définie pour des documents différents.

9. Procédé selon l'une quelconque des revendications 1 à 8, **caractérisé en ce que** le procédé comprend des étapes de procédé suivantes :
- application d'une première structure d'antenne (2) sur le premier corps de support (1, 1a) en fonction d'au moins un paramètre d'application spécifique à l'antenne,
- fourniture d'un autre corps de support,
- application d'une autre structure d'antenne sur l'autre corps de support en fonction de l'au moins un paramètre d'application spécifique à l'antenne,
dans lequel l'au moins un paramètre d'application spécifique à l'antenne est défini en fonction de l'au moins un paramètre de fissure.

10. Dispositif de fabrication d'un document de valeur et/ou de sécurité avec une structure d'antenne (2), comprenant un système d'application, un système radioscopique et au moins un système d'évaluation (47), dans lequel une structure d'antenne (2) peut être appliquée sur un corps de support (1, 1a) au moyen du système d'application, dans lequel une image radioscopique (DB) d'au moins une section de la structure d'antenne (2) peut être générée au moyen du système radioscopique, dans lequel au moins une zone d'image, dans laquelle l'au moins une section de la structure d'antenne (2) ou une partie de la section de la structure d'antenne (2) est reproduite, peut être définie au moyen du système d'évaluation (47), dans lequel des structures de fissure (R) peuvent être détectées dans la zone d'image et au moins un paramètre de fissure peut être défini si au moins une structure de fissure (R) est détectée, dans lequel un critère de qualité dépendant du paramètre de fissure peut être évalué.
